# EUROPEAN PATENT SPECIFICATION

(11) **EP 3 751 142 B1**
(45) Date of publication and mention of the grant of the patent: **16.08.2023**
(21) Application number: 18905801.9
(22) Date of filing: 06.02.2018
(51) Int. Cl.: F04C 18/02, F16K 15/16, F04C 23/00, F04C 29/12

(54) **COMPRESSOR AND REFRIGERATION CYCLE DEVICE**
VERDICHTER UND KÜHLKREISVORRICHTUNG DAMIT
COMPRESSEUR ET DISPOSITIF À CYCLE DE RÉFRIGÉRATION

(43) Date of publication of application: 16.12.2020
(73) Proprietor: Mitsubishi Electric Corporation, Tokyo 100-8310 (JP)
(72) Inventor: IMANISHI, Toshiki, Tokyo 100-8310 (JP); KOYAMA, Shuhei, Tokyo 100-8310 (JP)
(74) Representative: Pfenning, Meinig & Partner mbB
(86) International application number: PCT/JP2018/003979
(87) International publication number: WO 2019/155516

(56) References cited:
- JP-A- H05 272 472
- JP-A- H11 182 432
- JP-A- 2002 242 862
- JP-A- 2005 180 317
- JP-A- 2015 232 318
- JP-A- 2016 075 233
- JP-U- 3 196 646
- JP-U- 3 196 646
- JP-U- S5 481 126
- JP-U- S60 110 777

## Description

### Technical Field

The present disclosure relates to a compressor provided with a discharge-valve mechanism that opens and closes a discharge port of a compressing mechanism, and also to a refrigeration cycle apparatus including the compressor.

### Background Art

In general, a compressing mechanism of a scroll compressor has a discharge port from which refrigerant compressed in a compression chamber is discharged. A discharge chamber of a fixed scroll that is a component of the compressing mechanism is provided with a discharge-valve mechanism that opens and closes the discharge port (see, for example, Patent Literature 1). This discharge-valve mechanism isolates a high-pressure space in the discharge chamber and a low-pressure space in the compressing mechanism, in which the refrigerant has not yet been compressed using the fixed scroll. This discharge-valve mechanism includes a reed valve and a valve seat which is provided around the discharge port and on which the reed valve is located.

JP 2005 180317 A describes a rotary compressor having an outlet communicating with a compression space, and a valve body for opening and closing the outlet, wherein the opening degree of the outlet can be adjusted by expandably/ contractibly deforming a deforming member.

JP H11 182432 A describes a valve structure of a compressor with a delivery valve to open/close a delivery port formed in the center of an end plate part of a fixed scroll of a scroll compressor, wherein the main body part of the delivery valve is made freely extensible/contractible and a tip part is formed of a thick cap- shaped elastic body.

JP H05 272472 A describes a ring face shape discharge valve seat on which a discharge valve is seated and which is disposed on the outflow side in the discharge port of a fixed scroll. A C-shape snap ring is fitted into the groove of the fixed scroll and a valve guard for enclosing the discharge valve is fixed to the snap ring, wherein the discharge valve seat is formed into the ring face with the outer diameter smaller than the diameter of the discharge valve.

JP 2002 242862 A describes a scroll compressor with a reed valve for preventing backflow of discharge gas from a discharge hole provided at the center of the fixed scroll. A valve retainer for regulating the opening of the reed valve and one side of the reed valve are fixed to the back face of the end plate of the fixed scroll by a screw fastening member. The reed valve and the valve retainer provided on the back surface are positioned to come into contact with the side surfaces of the reed valve and the valve retainer in the rotation direction of the screw fastening member. Further, a pin that regulates the co-rotation of the reed valve and the valve retainer is installed upright in a pin insertion hole provided on the rear face of the end plate of the fixed scroll.

### Citation List

### Patent Literature

Patent Literature 1: Japanese Unexamined Patent Application Publication No. 2001-221173

### Summary of Invention

### Technical Problem

In an existing compressor, a reed valve or a valve seat may be damaged since an impact acts on the reed valve or the valve seat when the reed valve is located on the valve seat.

The present disclosure is applied to solve the above problem, and relates to a compressor and a refrigeration cycle apparatus in which the possibility that a reed valve and a valve seat will be damaged is reduced.

### Solution to Problem

This problem is solved by a compressor according to claim 1 and a refrigeration cycle apparatus according to claim 14. Further improvements of the compressor and the refrigeration cycle apparatus according to the invention are provided in the dependent claims.

A compressor according to the invention includes, inter alia, a shell; a compressing mechanism provided in the shell, and having a compression chamber where refrigerant is compressed and a discharge port from which the refrigerant compressed in the compression chamber is discharged; and a discharge-valve mechanism provided in a discharge chamber provided between the shell and the compressing mechanism. The discharge-valve mechanism opens and closes the discharge port. The discharge-valve mechanism includes: a valve seat attached to the compressing mechanism and having a valve-seat hole communicating with the discharge port; and a reed valve having a fixed end attached to the compressing mechanism and a distal end as a free end. The reed valve closes the valve seat when the reed valve is located on the valve seat. The valve seat is formed of material having a longitudinal elastic modulus lower than a longitudinal elastic modulus of the compressing mechanism. The valve-seat hole has a diameter larger than a diameter of an opening end of the discharge port that is located on an outlet side of the discharge port. With regard to a contact length between the reed valve and the valve seat on a center line that extends in an extending direction of the reed valve through a central portion of the reed valve in a width direction of the reed valve, a contact length at one of regions located on opposite sides of the valve-seat hole on the center line that is a region closer to the distal end of the reed valve is smaller than a contact length at the other region that is a region closer to the fixed end of the reed valve.

A refrigeration cycle apparatus according to another embodiment of the present disclosure includes the compressor.

### Advantageous Effects of Invention

In the compressor and the refrigeration cycle apparatus according to the embodiments of the present disclosure, the valve seat is formed of material having a lower longitudinal elastic modulus than that of the compressing mechanism, thus reducing an impact that acts on the reed valve or the valve seat when the reed valve is located on the valve seat, whereby the possibility of the reed valve and the valve seat being damaged can be reduced. Further, the contact length between the reed valve and the valve seat is such that the oil film breakage resistance between the reed valve and the valve seat at the valve opening timing of the discharge valve mechanism can be reduced, as well as the overcompression loss at the valve opening timing.

### Brief Description of Drawings

[Fig. 1] Fig. 1 is a schematic sectional view illustrating a compressor according to Embodiment 1 of the present disclosure.
[Fig. 2] Fig. 2 is a schematic sectional view illustrating a fixed scroll of the compressor according to Embodiment 1 of the present disclosure.
[Fig. 3] Fig. 3 is a schematic sectional view illustrating a distal end of a reed valve as illustrated in Fig. 2.
[Fig. 4] Fig. 4 is a schematic top view illustrating a relationship between the reed valve and a valve seat as illustrated in Fig. 3.
[Fig. 5] Fig. 5 is a sectional view of the valve seat as illustrated in Fig. 4 that is taken along line A-A in Fig. 4.
[Fig. 6] Fig. 6 is a schematic top view illustrating a positional relationship between the valve seat, the reed valve, and a discharge pipe in the compressor according to Embodiment 1 of the present disclosure.
[Fig. 7] Fig. 7 is a top view illustrating a valve seat of a compressor according to a modification of Embodiment 1 of the present disclosure.
[Fig. 8] Fig. 8 is a schematic cross-sectional view illustrating a seal structure of a discharge-valve mechanism of a compressor of a comparative example.
[Fig. 9] Fig. 9 is a cross-sectional view illustrating the shape of an outlet of a discharge port in the compressor according to Embodiment 1 of the present disclosure.
[Fig. 10] Fig. 10 is a top view illustrating a valve seat of a compressor according to Embodiment 2 of the present disclosure.
[Fig. 11] Fig. 11 is a sectional view of the valve seat as illustrated in Fig. 10 that is taken along line B-B in Fig. 10.
[Fig. 12] Fig. 12 is a sectional view of the valve seat as illustrated in Fig. 10 that is taken along line C-C in Fig. 10.
[Fig. 13] Fig. 13 is a top view illustrating a valve seat of a compressor according to Embodiment 3 of the present disclosure.
[Fig. 14] Fig. 14 is a cross-sectional view of the valve seat in Fig. 13 that is taken along line D-D in Fig. 13.
[Fig. 15] Fig. 15 is a side view of the valve seat as illustrated in Fig. 13.
[Fig. 16] Fig. 16 is a schematic cross-sectional view illustrating a relationship between the valve seat as illustrated in Fig. 15 and the reed valve.
[Fig. 17] Fig. 17 is a schematic cross-sectional view illustrating a valve seat of a compressor according to Embodiment 4 of the present disclosure.
[Fig. 18] Fig. 18 is a top view of a spacer as illustrated in Fig. 17.
[Fig. 19] Fig. 19 is a side view of the spacer as illustrated in Fig. 17.
[Fig. 20] Fig. 20 is a schematic view illustrating a refrigeration cycle apparatus provided with a compressor according to Embodiment 5 of the present disclosure. Description of Embodiments

A compressor 100 according to each of the embodiments of the present disclosure will be described with reference to the drawings. In each of figures that will be referred to below, components that are the same as those in a previous figure are denoted by the same reference signs. The same is true of the entire text of the specification relating to the embodiments. Furthermore, the configurations of components as described in the entire text of the specification are merely examples; that is, the configurations of the components are not limited to the configurations described in the specification. Furthermore, in the figures, the relationship between the sizes of components as illustrated in the figures may be sometimes different from the relationship between actual sizes of the components. In addition, in order that the embodiments be easily understood, terms related to directions and sides (such as "upper", "lower", "right", "left", front", and "rear") are used as appropriate. However, these terms are used as a matter of convenience for explanation, but do not limit the locations or orientations of devices and components.

### Embodiment 1

### [Configuration of Compressor 100]

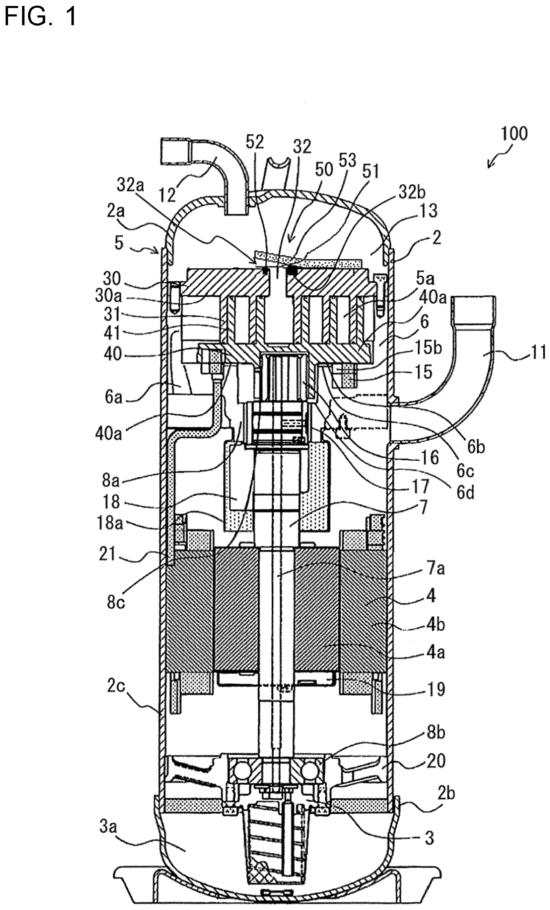

Fig. 1 is a schematic sectional view illustrating a compressor 100 according to Embodiment 1 of the present disclosure. The compressor 100 is, for example, a scroll compressor including a shell filled with low-pressure refrigerant. The compressor 100 is applied to a refrigeration cycle apparatus 200 (which will be described later) for use in refrigeration or air-conditioning in, for example, a refrigerator, a freezer, an automatic dispenser, an air-conditioning apparatus, a refrigeration apparatus, or a water heater. The compressor 100 sucks therein refrigerant that circulates in a refrigeration circuit of the refrigeration cycle apparatus 200, compresses the refrigerant into a high-temperature, high-pressure refrigerant, and discharges the high-temperature, high-pressure refrigerant.

As illustrated in Fig. 1, the compressor 100 includes a shell 2, an oil pump 3, a motor 4, a compressing mechanism 5, a frame 6, and a shaft 7. Furthermore, the compressor 100 includes a suction pipe 11, a discharge pipe 12, a sub frame 20, and an oil drain pipe 21.

### (Shell 2)

The shell 2 includes a middle shell 2c, an upper shell 2a provided above the middle shell 2c, and a lower shell 2b provided below the middle shell 2c, and is provided as an outer shell of the compressor 100. The shell 2 is formed in the shape of a cylinder having a bottom, and has an oil reservoir 3a at a lower portion of the shell 2. The shell 2 houses the oil pump 3, the motor 4, the compressing mechanism 5, the frame 6, the shaft 7, the sub frame 20, the oil drain pipe 21, etc. The middle shell 2c forms a cylindrical peripheral wall of the shell 2. In the shell 2, an upper end of the middle shell 2c is closed by the upper shell 2a, and the upper shell 2a is domed. Furthermore, in the shell 2, a lower end of the middle shell 2c is closed by the lower shell 2b. A discharge chamber 13 is provided between the upper shell 2a of the shell 2 and the compressing mechanism 5, and the space in the discharge chamber 13 is a high-pressure space. Also, the discharge chamber 13 is provided above the compressing mechanism 5. In the discharge chamber 13, refrigerant to be compressed by and discharged from the compressing mechanism 5 is provided.

### (Oil Pump 3)

The oil pump 3 is provided in the shell 2 and pumps up oil from the oil reservoir 3a. The oil pump 3 is provided at a lower portion of the shell 2. The oil pump 3 supplies the oil pumped from the oil reservoir 3a to lubrication portions of the compressor 100, such as a bearing, to thereby lubricate the lubrication portions. After being pumped by the oil pump 3 and lubricating an orbiting bearing 8c, for example, the oil is stored in an internal space 6d defined by the frame 6, then passes through a radial oil feeding groove 6c provided in a thrust bearing 6b, and flows into an Oldham ring space 15b to lubricate an Oldham ring 15. The oil drain pipe 21 is connected with the Oldham ring space 15b, and the oil is thus returned from the Oldham ring space 15b to the oil reservoir 3a through the oil drain pipe 21.

### (Motor 4)

The motor 4 is set between the frame 6 and the sub frame 20 in the shell 2, and rotates the shaft 7. The motor 4 includes a stator 4b fixed to an inner peripheral wall of the middle shell 2c and a rotor 4a provided on an inner peripheral side of the stator 4b. The stator 4b is supplied with electric power supplied from the outside of the compressor 100 to rotate the rotor 4a. The stator 4b is formed by, for example, setting a wire at a laminated core such that the wire is wound to have a plurality of phases. The shaft 7 that transmits a rotational driving force of the motor 4 to an orbiting scroll 40 is fixed to the rotor 4a. When the stator 4b is supplied with electric power, the rotor 4a rotates on its own axis, and thus rotates along with the shaft 7. The motor 4 can change the rotation speed of the shaft 7 under, for example, an inverter control.

### (Compressing Mechanism 5)

The compressing mechanism 5 is provided in the shell 2 and compresses a fluid (for example, refrigerant) sucked from the suction pipe 11 into the shell 2. The compressing mechanism 5 is provided in the shell 2 and has a compression chamber 5a where the refrigerant is compressed. In the compressing mechanism 5, a discharge port 32 is formed. The refrigerant compressed in the compression chamber 5a is discharged from the discharge port 32. The compressing mechanism 5 includes a fixed scroll 30 fixed to the shell 2 and the orbiting scroll 40 that orbits or rotates around the fixed scroll 30 (as an orbital motion). The fixed scroll 30 is fixed to the shell 2 by, for example, fixing fixing members such as bolts to an upper end of the frame 6 such that the fixed scroll 30 closes a tubular opening port of the frame 6. Although it is described above by way of example that the fixed scroll 30 is fixed to the frame 6, the fixed scroll 30 may be directly fixed to the middle shell 2c of the shell 2 without being fixed to the frame 6.

The fixed scroll 30 compresses together with the orbiting scroll 40, the refrigerant. The fixed scroll 30 is provided in such a manner as to face the orbiting scroll 40. The fixed scroll 30 has an end plate 30a and a spiral portion 31 that extends downwards at a lower surface of the end plate 30a. The spiral portion 31 is a spiral protrusion that protrudes toward the orbiting scroll 40 from a wall surface of the end plate 30a that faces the orbiting scroll 40 and that has a spiral cross section parallel to the end plate 30a. The end plate 30a forms together with the spiral portion 31 of the fixed scroll 30 and a spiral portion 41 of the orbiting scroll 40, the compression chamber 5a. The end plate 30a is fixed in the shell 2 such that an outer peripheral surface of the end plate 30a faces an inner peripheral surface of the middle shell 2c and an outer peripheral edge of a lower end surface of the end plate 30a faces an upper portion of the frame 6. Furthermore, at the center of the end plate 30a that forms part of the fixed scroll 30, the discharge port 32 that is provided to discharge the refrigerant compressed in the compression chamber 5a extends through the end plate 30a. Around an opening end 32a of the discharge port 32 that is located on an outlet side of the discharge port 32, a valve-seat accommodation portion 32b is provided. In the valve-seat accommodation portion 32b, a valve seat 52 of a discharge-valve mechanism 50 is set. The discharge-valve mechanism 50 is provided in such a manner as to cover the opening end 32a on the outlet side of the discharge port 32, and prevents backflow of the refrigerant discharged from the opening end 32a on the outlet side of the discharge port 32. The discharge-valve mechanism 50 will be described in detail later.

The orbiting scroll 40 compresses together with the fixed scroll 30, the refrigerant. The orbiting scroll 40 is provided to face the fixed scroll 30. The orbiting scroll 40 is eccentric relative to the fixed scroll 30. The orbiting scroll 40 has an end plate 40a and the spiral portion 41 that extends upwards at an upper surface of the end plate 40a. The spiral portion 41 is a spiral protrusion that protrudes toward the fixed scroll 30 from a wall surface of the end plate 40a that faces the fixed scroll 30 and that has a spiral cross section parallel to the end plate 40a. The end plate 40a forms together with the spiral portion 41 of the orbiting scroll 40 and the spiral portion 31 of the fixed scroll 30, the compression chamber 5a. The end plate 40a is a disk-shaped component and makes an orbital motion in the space defined by the frame 6 in accordance with rotation of the shaft 7. A thrust load of the orbiting scroll 40 in the axial direction is supported by the frame 6. A wall surface of the end plate 40a that is located on a side opposite to the wall surface from which the spiral portion 41 protrudes serves as the thrust bearing 6b. Rotation of the orbiting scroll 40 on its own axis is dampened by the Oldham ring 15, and the orbiting scroll 40 rotates around the fixed scroll 30, that is, orbits around the fixed scroll 30 as an orbital motion.

The Oldham ring 15 is provided on a thrust surface of the end plate 40a that is located on the side opposite to the upper surface of the end plate 40a from which the spiral portion 41 of the orbiting scroll 40 extends upward, and inhibits rotation of the orbiting scroll 40 on its axis. The Oldham ring 15 inhibits rotation of the orbiting scroll 40 on its own axis, and in addition enables the orbiting scroll 40 to make an orbital motion. Upper and lower surfaces of the Oldham ring 15 are provided with respective claws (not illustrated) that protrude in such a manner as to cross each other. The claws of the Oldham ring 15 are fitted in Oldham recesses (not illustrated) provided in the orbiting scroll 40 and the frame 6.

In the fixed scroll 30 and the orbiting scroll 40, the spiral portion 31 and the spiral portion 41 face each other at surfaces of the fixed scroll 30 and the orbiting scroll 40 that face each other, and the spiral portion 31 and the spiral portion 41 mesh with each other. In space where the spiral portion 31 of the fixed scroll 30 and the spiral portion 41 of the orbiting scroll 40 mesh with each other, the compression chamber 5a is provided. When the orbiting scroll 40 is moved by the shaft 7 to make an orbital motion, the refrigerant that is in a gas state, that is, gas refrigerant, is compressed in the compression chamber 5a.

### (Frame 6)

The frame 6 is formed in a tubular shape, an outer peripheral portion of the frame 6 is fixed to the shell 2, and in the space defined by an inner peripheral portion of the frame 6, the compressing mechanism 5 is accommodated. The frame 6 holds the orbiting scroll 40 of the compressing mechanism 5. The frame 6 supports a thrust bearing load that is applied when the compressor 100 is in operation, with the thrust bearing 6b of the orbiting scroll 40 interposed between the frame 6 and the thrust bearing load. The frame 6 supports the shaft 7 such that the shaft 7 can be rotated, with a main bearing 8a interposed between the frame 6 and the shaft 7. In the frame 6, a suction port 6a is formed. The gas refrigerant that is sucked from the suction pipe 11 flows into the compressing mechanism 5 through the suction port 6a.

A sleeve 17 is provided between the frame 6 and the main bearing 8a. The sleeve 17 is a tubular component. The sleeve 17 corrects tilts of the frame 6 and the shaft 7.

### (Shaft 7)

The shaft 7 is connected to the motor 4 and the orbiting scroll 40, and transmits the rotational force of the motor 4 to the orbiting scroll 40. A shaft portion of the shaft 7 that is located above the rotor 4a is rotatably supported by the main bearing 8a provided at the frame 6. Furthermore, a shaft portion of the shaft 7 that is located below the rotor 4a is rotatably supported by a sub bearing 8b of the sub frame 20. At a lower end of the shaft 7, the oil pump 3 is provided to pump up the oil stored in the oil reservoir 3a. In the shaft 7, an oil passage 7a is formed. Through the oil passage 7a, the oil pumped up by the oil pump 3 flows upwards.

A slider 16 is attached to an outer peripheral surface of an upper portion of the shaft 7. The slider 16 is a tubular component. The slider 16 is located at an inner side surface of a lower portion of the orbiting scroll 40. The orbiting scroll 40 is attached to the shaft 7, with the slider 16 interposed between the orbiting scroll 40 and the shaft 7. The orbiting scroll 40 is thus rotated along with the rotation of the shaft 7. It should be noted that the orbiting bearing 8c is provided between the orbiting scroll 40 and the slider 16.

At the shaft 7, a first balancer 18 and a second balancer 19 are provided. The first balancer 18 is fixed to the upper portion of the shaft 7 by, for example, shrink fitting. The first balancer 18 is located between the frame 6 and the rotor 4a. The first balancer 18 is accommodated in a balancer cover 18a. The second balancer 19 is attached to a lower end of the rotor 4a, and is located between the rotor 4a and the sub frame 20. The first balancer 18 and the second balancer 19 correct unbalance of the shaft 7 that is caused by the orbiting scroll 40 and the slider 16.

### (Suction Pipe 11)

The suction pipe 11 is a pipe for use in sucking the gas refrigerant into the shell 2. The suction pipe 11 is provided at a side wall of the shell 2, and is connected to the middle shell 2c.

### (Discharge Pipe 12)

The discharge pipe 12 is a pipe for use in discharging the refrigerant compressed by the compressing mechanism 5 from the shell 2 to the outside of the shell 2. The discharge pipe 12 is provided at an upper portion of the shell 2, and is connected to the upper shell 2a. The discharge pipe 12 connects the discharge chamber 13 provided in the shell 2 and a refrigeration circuit provided outside the shell 2.

### (Sub Frame 20)

The sub frame 20 is provided below the motor 4 in the shell 2, and is fixed to the inner peripheral surface of the middle shell 2c. The sub frame 20 rotatably supports the shaft 7, with the sub bearing 8b interposed between the sub frame 20 and the shaft 7. The sub bearing 8b is a ball bearing; however, it is not limited to the ball bearing. That is, another type of bearing is applied as the sub bearing 8b. The sub bearing 8b is fitted in a sub-bearing accommodation portion fixed to a central portion of the sub frame 20.

### (Oil Drain Pipe 21)

The oil drain pipe 21 is a pipe through which the space between the frame 6 and the orbiting scroll 40 communicates with the space between the frame 6 and the sub frame 20. The oil drain pipe 21 causes excess oil of the oil that flows through the space between the frame 6 and the orbiting scroll 40 to flow into the space between the frame 6 and the sub frame 20. The oil that has flowed into the space between the frame 6 and the sub frame 20 is returned to the oil reservoir 3a via the sub frame 20.

### [Operation of Compressor 100]

Next, the operation of the compressor 100 will be described. When electric power is supplied from the outside of the compressor 100 to the stator 4b, a magnetic field is generated at the stator 4b. This magnetic field causes the rotor 4a to rotate. That is, when the stator 4b is supplied with electric power, the rotor 4a produces torque, thus causing the shaft 7 supported by the main bearing 8a and the sub bearing 8b in the frame 6 to rotate. The rotation of the orbiting scroll 40 on its own axis, which is connected to the shaft 7, is dampened by the Oldham ring 15 that reciprocates in a direction parallel to an Oldham groove in the frame 6, and makes an orbital motion. In accordance with these motions, the compressor 100 changes the capacity of the compression chamber 5a defined by both the spiral portion 31 of the fixed scroll 30 and the spiral portion 41 of the orbiting scroll 40.

With the orbital motion of the orbiting scroll 40, the gas refrigerant sucked from the suction pipe 11 into the shell 2 is made to flow into the compression chamber 5a provided between the spiral portion 31 of the fixed scroll 30 and the spiral portion 41 of the orbiting scroll 40, and is compressed as the refrigerant flows toward the center of the compression chamber 5a. Then, the compressed refrigerant is discharged from the discharge port 32 formed in the end plate 30a of the fixed scroll 30 by opening the discharge-valve mechanism 50, and is made to flow from the discharge pipe 12 to a refrigerant circuit provided outside the compressor 100.

In the compressor 100, unbalance caused by the motions of the orbiting scroll 40 and the Oldham ring 15 is corrected by the first balancer 18 attached to the shaft 7 and the second balancer 19 attached to the rotor 4a. Furthermore, in the compressor 100, the lubricating oil stored in the lower portion of the shell 2 is supplied to sliding potions such as the main bearing 8a, the sub bearing 8b, and the thrust surface, through the oil passage 7a provided in the shaft 7.

### [Configuration of Discharge-Valve Mechanism 50]

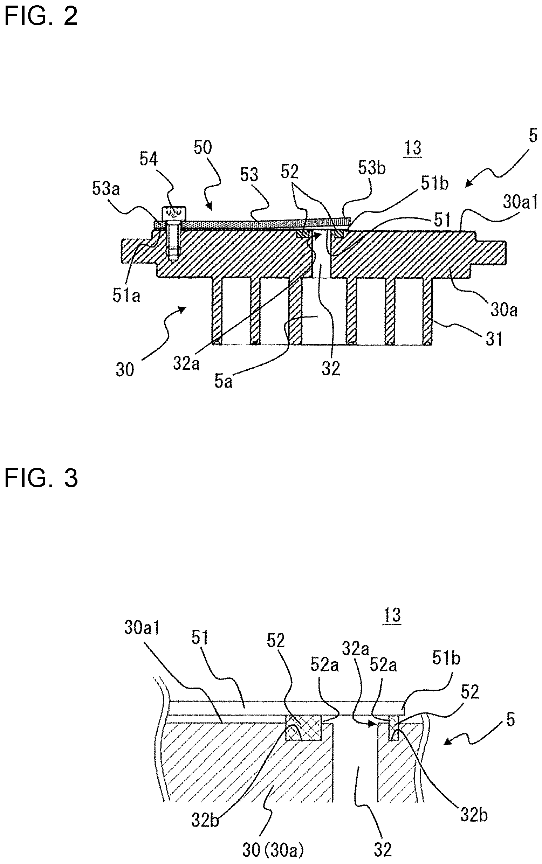

Fig. 2 is a schematic cross-sectional view illustrating the fixed scroll 30 of the compressor 100 according to Embodiment 1 of the present disclosure. Fig. 3 is a schematic cross-sectional view illustrating a distal end of a reed valve 51 as illustrated in Fig. 2. The discharge-valve mechanism 50 will be described with reference to Figs. 1 to 3. The discharge-valve mechanism 50 is provided in the discharge chamber 13 provided between the upper shell 2a of the shell 2 and the compressing mechanism 5, and opens and closes the discharge port 32. As illustrated in Fig. 2, the discharge-valve mechanism 50 includes the reed valve 51 and the valve seat 52. The reed valve 51 and the valve seat 52 are disposed at the fixed scroll 30. The discharge-valve mechanism 50 further includes a valve retainer 53.

### (Reed Valve 51)

The reed valve 51 opens and closes the discharge port 32 in accordance with the discharge pressure of the refrigerant. The reed valve 51 is provided on a side of the compressing mechanism 5 that adjoins the discharge chamber 13, and is provided at the opening end 32a of the discharge port 32 that is located on the outlet side of the discharge port 32. The reed valve 51 is a long plate-like component having a fixed end 51a attached to the compressing mechanism 5 and a distal end 51b as a free end. The fixed end 51a of the reed valve 51 is attached together with the valve retainer 53 to the fixed scroll 30 by a fastener 54. The fastener 54 is, for example, a screw. More specifically, the fixed end 51a of the reed valve 51 is fixed to a surface 30a1 of the end plate 30a forming part of the fixed scroll 30, which is a surface adjoining the discharge chamber 13. The distal end 51b of the reed valve 51 is a free end, that is, a distal end of the reed valve 51 extending from the fixed end 51a in the longitudinal direction of the reed valve 51. The distal end 51b of the reed valve 51 is located on the valve seat 52, and is a seal portion that serves as a partition between the high-pressure space in the discharge chamber 13 and a low-pressure space in the compression chamber 5a that is space in which the refrigerant has not yet been compressed. In the reed valve 51, when the pressure in the compression chamber 5a is lower than a preset pressure, the distal end 51b is located on the valve seat 52 to close the discharge port 32. That is, when being located on the valve seat 52, the reed valve 51 closes a valve-seat hole 52a. Then, the reed valve 51 restricts the flow of the refrigerant from the compression chamber 5a toward the discharge chamber 13, and prevents backflow of the refrigerant from the high-pressure space in the discharge chamber 13 into the discharge port 32. When the pressure in the compression chamber 5a becomes higher than or equal to the preset pressure, the distal end 51b of the reed valve 51 is pushed upwards by the pressure, whereby the reed valve 51 opens the discharge port 32. The reed valve 51 has the fixed end 51a and the distal end 51b on its both sides in the longitudinal direction.

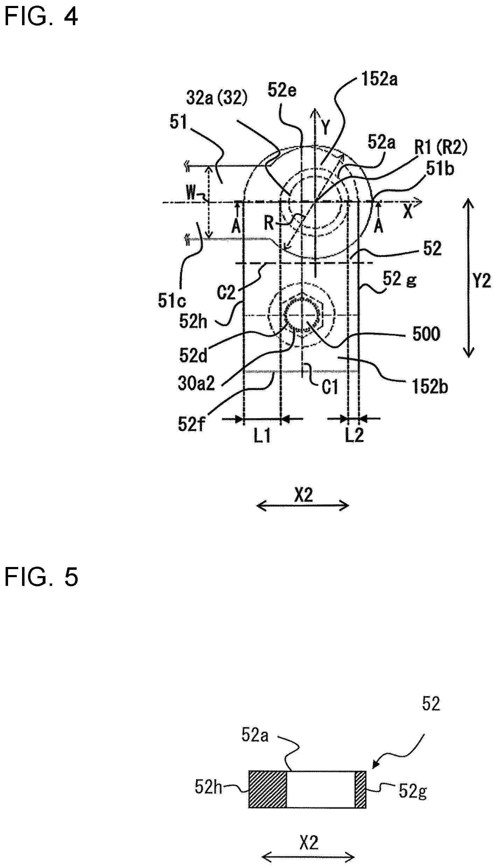

Fig. 4 is a schematic top view illustrating a relationship between the reed valve 51 and the valve seat 52 as illustrated in Fig. 3. Specifically, Fig. 4 is a diagram of the reed valve 51 and the valve seat 52, as viewed from the discharge chamber 13, and referring to Fig. 4, the reed valve 51 is located on the valve seat 52. The configuration of the valve seat 52 located below the reed valve 51 is indicated by dotted lines. In Fig. 4, an X-axis direction and a Y-axis direction are directions that are referred to in explanation of the configuration of the reed valve 51, and an X2-axis direction and a Y2-axis direction are directions that are referred to in explanation of the configuration of the valve seat 52. As illustrated in Fig. 4, part of the distal end 51b of the reed valve 51 is circular. A circular portion of the distal end 51b of the reed valve 51 has a diameter R that is larger than a width W of an intermediate portion 51c located between the distal end 51b and the fixed end 51a. The reed valve 51 is line-symmetric with respect to a center line X that extends between the fixed end 51a and the distal end 51b located on the valve seat 52. It should be noted that the center line X is an axis extending through a central portion of the reed valve 51 that is located at the center of the reed valve 51 in a width direction (the Y-axis direction) of the reed valve 51. In a width direction (the X2-axis direction) of the valve seat 52, a center R1 of the circular portion of the distal end 51b is closer to an end 52g of the valve seat 52 that is located close to the distal end 51b, than a center line C1 extending through a central portion of the valve seat 52 that is located at the center of the valve seat 52 in the width direction (the Y axis direction) thereof. The end 52g of the valve seat 52 is located opposite to an end 52h of the valve seat 52 that is closer to the fixed end 51a. It should be noted that as illustrated in Fig. 4, the center line X of the reed valve 51 and the center line C1 of the valve seat 52 cross each other at right angles as illustrated as viewed in plan view; however, it is not indispensable that the center lines X and C1 cross each other at right angles as illustrated in plan view.

### (Valve Seat 52)

Fig. 5 is a cross-sectional view of the valve seat 52 that is taken along line A-A in Fig. 4. The valve seat 52 will be described with reference to Figs. 3 to 5. As illustrated in Figs. 3 and 4, in the fixed scroll 30 of the compressing mechanism 5, the valve seat 52 is provided in such a manner as to surround the entire periphery of the opening end 32a on the outlet side of the discharge port 32. As illustrated in Fig. 3, the fixed scroll 30 of the compressing mechanism 5 has the valve-seat accommodation portion 32b that accommodates the valve seat 52. The valve-seat accommodation portion 32b is provided at the surface 30a1 of the end plate 30a, which adjoins the discharge chamber 13, the end plate 30a forming part of the fixed scroll 30 of the compressing mechanism 5. The valve-seat accommodation portion 32b is recessed from the surface 30a1 of the end plate 30a toward the compression chamber 5a. The recessed portion of the valve-seat accommodation portion 32b is formed by, for example, counter-bore processing. As illustrated in Figs. 3 and 4, the valve seat 52 is attached to the compressing mechanism 5. More specifically, with the valve seat 52 located in the valve-seat accommodation portion 32b, the valve seat 52 is fixed to the end plate 30a of the fixed scroll 30 by using a fixing member 500. With the valve seat 52 located in the valve-seat accommodation portion 32b, the valve seat 52 protrudes from the compressing mechanism 5 in a direction in which the reed valve 51 is separated from the valve seat 52. More specifically, with the valve seat 52 located in the valve-seat accommodation portion 32b, the valve seat 52 protrudes from the surface 30a1 of the end plate 30a of the fixed scroll 30 in the direction in which the reed valve 51 is separated from the valve seat 52.

As illustrated in Fig. 4, as viewed in plan view of the surface 30a1 of the end plate 30a as viewed from the discharge chamber 13, the valve seat 52 is basically rectangular, and corners of an end 52e of the valve seat 52 in the longitudinal direction (the Y2-axis direction) are each chamfered and formed in the shape of a circular arc. Specifically, the valve seat 52 has a semicircular portion 152a and a rectangular portion 152b. It should be noted that in the valve seat 52, an imaginary line between one side of the rectangular portion 152b and an edge of the semicircular portion 152a extends in the longitudinal direction (the Y2-axis direction), and an imaginary line between the opposing sides of the rectangular portion 152b extends in the width direction (the X2-axis direction). Furthermore, as illustrated in Fig. 5, a vertical section of the valve seat 52 is rectangular and longer in the width direction (the X2-axis direction). It should be noted that as illustrated in Fig. 4, the width direction (the X2-axis direction) of the valve seat 52 is the extending direction of the reed valve 51. Furthermore, a surface of the valve seat 52 that faces the reed valve 51 is flat. The valve seat 52 is formed of a material that has a lower longitudinal elastic modulus than that of the fixed scroll 30 of the compressing mechanism 5. The material having a low longitudinal elastic modulus is, for example, a resin material such as rubber. It should be noted that the longitudinal elastic modulus of the reed valve 51 and the longitudinal elastic modulus of the compressing mechanism 5 are nearly equal to each other, and are greater than the longitudinal elastic modulus of the valve seat 52.

As illustrated in Fig. 4, the valve seat 52 has the valve-seat hole 52a which communicates with the discharge port 32 and through which the refrigerant discharged from the discharge port 32 flows. The reed valve 51 is located in such a manner as to close the valve-seat hole 52a. In the longitudinal direction (the Y2-axis direction) of the valve seat 52, the valve-seat hole 52a is provided between a central portion C2 of the valve seat 52 in the longitudinal direction (the Y2-axis direction) and the end 52e of the valve seat 52 that is formed in the shape of a circular arc. In plan view of the surface 30a1 of the end plate 30a as viewed from the discharge chamber 13, the discharge port 32 is located within the valve-seat hole 52a. The diameter of the valve-seat hole 52a is larger than the diameter of the opening end 32a on the outlet side of the discharge port 32 provided in the fixed scroll 30, whereby the pressure of the refrigerant discharged from the discharge port 32 does not directly act on the valve seat 52. It is preferable that the central portion of the opening end 32a of the discharge port 32 and the central portion of the valve-seat hole 52a coincide with each other in plan view of the surface 30a1 of the end plate 30a as viewed from the discharge chamber 13. Also, it is preferable that in plan view of the surface 30a1 of the end plate 30a as viewed from the discharge chamber 13, a center point R2 of the valve-seat hole 52a coincides with the center R1 of the circular portion of the distal end 51b of the reed valve 51. Furthermore, the center point R2 of the valve-seat hole 52a is closer to the end 52g, in the width direction (the X2-axis direction) of the valve seat 52, than the center line C1 that extends through the center portion of the valve seat 52 that is located at the center of the valve seat 52 in the width direction (the X2-axis direction) of the valve seat 52. In the lateral direction (the X2-axis direction) of the valve seat 52, the end 52g is an end of the valve seat 52 that is located closer to the distal end 51b of the reed valve 51 than to the fixed end 51a of the reed valve 51 in the width direction (the X2-axis direction) of the valve seat 52. Specifically, the center point R2 of the valve-seat hole 52a of the valve seat 52 is closer to the distal end 51b of the reed valve 51 than the center of an imaginary circle formed by an outer edge of the semicircular portion 152a. Therefore, with regard to the contact length between the reed valve 51 and the valve seat 52 on the center line X that extends in the extending direction of the reed valve 51 through the central portion of the reed valve 51 in the width W direction of the reed valve 51, a contact length L2 at one of regions located on opposite sides of the valve-seat hole 52a on the center line X that is a region closer to the distal end 51b of the reed valve 51 is smaller than a contact length L1 at the other region that is closer to the fixed end 51a of the reed valve 51. As a result, in the compressor 100, with regard to the contact area between the reed valve 51 and the valve seat 52, the contact area at the region closer to the distal end 51b of the reed valve 51 is smaller than the contact area at the region closer to the fixed end 51a of the reed valve 51. With regard to the contact area between the reed valve 51 and the valve seat 52 in the compressor 100, since the contact area at the region closer to the distal end 51b of the reed valve 51 is smaller than the contact area at the region closer to the fixed end 51a of the reed valve 51, the rupture resistance of oil film at the region closer to the distal end 51b of the reed valve 51 can be reduced.

The valve seat 52 further has an insertion hole 52d into which the fixing member 500 is inserted. The insertion hole 52d is located between the central portion C2 and an end 52f of the valve seat 52 in the longitudinal direction (the Y2-axis direction) of the valve seat 52. To be more specific, as illustrated in Fig. 4, the insertion hole 52d is located on the center line C1 that extends through the central portion of the valve seat 52 that is located at the center of the valve seat 52 in the width direction (the X2-axis direction) of the valve seat 52. As illustrated in Fig. 4, the center line C1 is parallel to the Y axis that is perpendicular to the center line X of the reed valve 51. However, regarding the location of the insertion hole 52d, it suffices that the insertion hole 52d is located on the center line C1 extending through the central portion of the valve seat 52 that is located at the center of the valve seat 52 in the width direction (the X2-axis direction) thereof, and it is not indispensable that the center line C1 is parallel to the Y axis.

As illustrated in Fig. 4, the discharge-valve mechanism 50 further includes the fixing member 500 that fixes the valve seat 52 to the compressing mechanism 5. To be more specific, the fixing member 500 fixes the valve seat 52 to the end plate 30a of the fixed scroll 30. The fixing member 500 is, for example, a screw. The end plate 30a of the fixed scroll 30 has a screw hole 30a2 for use in fixation of the fixing member 500. In plan view of the surface 30a1 of the end plate 30a as viewed from the discharge chamber 13, the insertion hole 52d of the valve seat 52, into which the fixing member 500 is inserted, is located at the same position as the screw hole 30a2 of the end plate 30a. Since the valve seat 52 is fixed to the end plate 30a of the fixed scroll 30 by the fixing member 500, the possibility that the valve seat 52 will come off the end plate 30a is reduced. In the compressor 100, the fixing member 500 is located on the center line C1 extending through the central portion of the valve seat 52 that is located at the center of the valve seat 52 in the width direction (the X2-axis direction) of the valve seat 52, whereby the valve seat 52 is stably fixed.

As illustrated in Fig. 2, the valve retainer 53 is a long plate-like member that has a fixed end 53a attached to the compressing mechanism 5 and a distal end 53b as a free end. The fixed end 53a of the valve retainer 53 is attached together with the reed valve 51 to the fixed scroll 30 by the fastener 54. More specifically, the fixed end 53a of the valve retainer 53 is fixed to the surface 30a1 of the end plate 30a that forms part of the fixed scroll 30, and the surface 30a1 is a surface close to the discharge chamber 1. The distal end 53b of the valve retainer 53 is a free end located at the distal end of the valve retainer 53 that extends from the fixed end 53a in the longitudinal direction. The valve retainer 53 has the fixed end 53a and the distal end 53b and extends in the longitudinal direction, and the distal end 53b is warped toward the discharge chamber 13. The valve retainer 53 supports the reed valve 51 from a rear surface side thereof when the reed valve 51 is open, and protects the reed valve 51 to prevent the reed valve 51 from being deformed more than necessary.

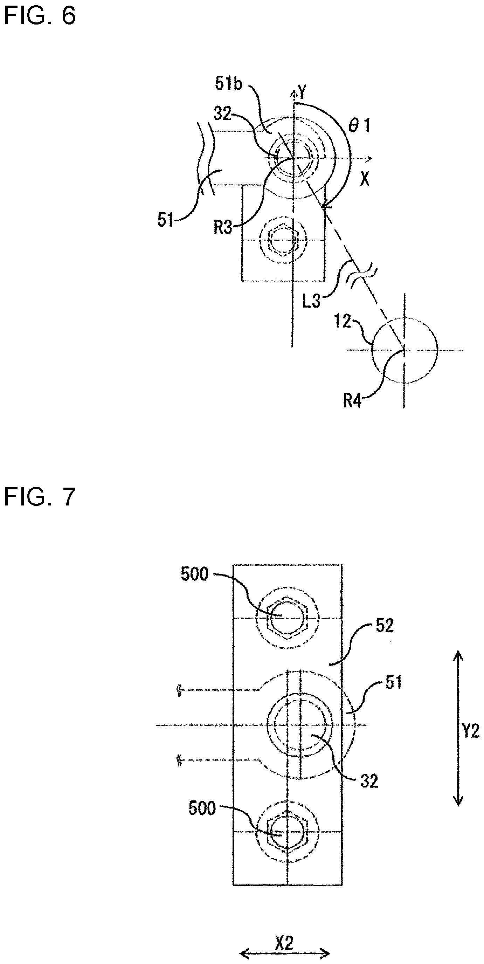

Fig. 6 is a schematic top view illustrating a positional relationship between the valve seat 52, the reed valve 51, and the discharge pipe 12 in the compressor 100 according to Embodiment 1 of the present disclosure. Next, a positional relationship between the discharge pipe 12 and the discharge port 32 at which the valve seat 52 is provided in the compressor 100 will be described. As illustrated in Fig. 4, in the compressor 100, preferably, the center of the valve-seat hole 52a of the valve seat 52 and the center of the discharge port 32 should coincide with each other. Furthermore, in the compressor 100, the center point R2 of the valve-seat hole 52a in the valve seat 52 and the center R1 of the distal end 51b of the reed valve 51 coincide with each other. As illustrated in Fig. 6, in the compressor 100, preferably, an angle θ1 at which the Y axis extending through a center R3 of the discharge port 32 in a direction perpendicular to the center line X of the reed valve 51 and a line L3 connecting a center R4 of the discharge pipe 12 and the center R3 of the discharge port 32 cross each other in the clockwise direction should fall within the range of 0 to 180 degrees. In the relationship between the reed valve 51 and the Y axis that is perpendicular to the center line X of the reed valve 51, the angle θ1 is an angle at the distal end of the reed valve 51, not that at the fixed end 51a of the reed valve 51. In the case where the above angle θ1 in the clockwise direction falls within the range of 0 to 180 degrees, the intermediate portion 51c of the reed valve 51 does not hinder the flow of the refrigerant that is discharged from the discharge port 32, and the refrigerant discharged from the discharge port 32 more easily flows into the discharge pipe 12. Therefore, in the compressor 100, the pressure loss of the compressed refrigerant from the discharge port 32 to the discharge pipe 12 is reduced.

### [Operation of Discharge-Valve Mechanism 50]

When the differential pressure between the high-pressure space in the discharge chamber 13 and the space in the compression chamber 5a is a given differential pressure, and the reed valve 51 is pressed against the valve seat 52 by the differential pressure between the high-pressure space in the discharge chamber 13 and the space in the compression chamber 5a, the discharge-valve mechanism 50 is closed. As illustrated in Fig. 3, when the distal end 51b of the reed valve 51 is located on the valve seat 52, the valve seat 52 is pressed down by the distal end 51b of the reed valve 51. The discharge-valve mechanism 50 is kept in a closed state in which the valve seat 52 is pressed down by the distal end 51b of the reed valve 51 and the valve-seat hole 52a is sealed by the reed valve 51. The reed valve 51 restricts the flow of the refrigerant from the compression chamber 5a toward the discharge chamber 13, and prevents backflow of the refrigerant from the discharge chamber 13 that is a high-pressure space into the discharge port 32. As the compression of the refrigerant in the compression chamber 5a progresses, the pressure in the compression chamber 5a rises. In the discharge-valve mechanism 50, when the pressure in the compression chamber 5a rises to a higher pressure than that of the high-pressure space in the discharge chamber 13, the reed valve 51 is warped upwards and separated from the valve seat 52, that is, the reed valve 51 is opened. The rear side of the opened reed valve 51 is supported by the valve retainer 53 in order that the reed valve 51 be prevented from being damaged. When the high-pressure refrigerant in the compression chamber 5a has been completely discharged from the compression chamber 5a, the state of the reed valve 51 is restored to the original state, that is, the form of the reed valve 51 is changed back to the form of a flat plate, whereby the discharge-valve mechanism 50 is in a closed-valve state.

### [Modification of Valve Seat 52]

Fig. 7 is a top view illustrating the valve seat 52 of the compressor 100 according to a modification of Embodiment 1 of the present disclosure. It is not indispensable that the valve seat 52 has a semicircular portion and a rectangular portion. The valve seat 52 may be formed to have a rectangular portion only, as illustrated in Fig. 7. In the valve seat 52 formed to have the rectangular portion only, the valve-seat hole 52a can be provided in the central portion in the longitudinal direction, and fixing members 500 can be provided on opposite sides, with the valve-seat hole 52a interposed between the fixing members 500. That is, as illustrated in Fig. 7, the fixing members 500 are provided on opposite sides with respect to the reed valve 51. Because of this configuration, the valve seat 52 is fixed at a plurality of locations, and the valve seat 52 is fixed at the opposite ends of the valve seat 52, with the valve-seat hole 52a interposed between the opposite ends of the valve seat 52, whereby the valve seat 52 and the fixed scroll 30 are reliably fixed to each other.

### [Advantages of Embodiment 1]

As described above, the valve seat 52 is formed of material having a longitudinal elastic modulus lower than that of the compressing mechanism 5, whereby an impact that occurs when the reed valve 51 is located on the valve seat 52 is reduced. Therefore, in the compressor 100, it is possible to reduce the possibility of the reed valve 51 and the valve seat 52 being damaged. Furthermore, in the compressor 100, since the impact occurring when the reed valve 51 is located on the valve seat 52 can be reduced, the reliability and durability of the reed valve 51 are improved.

The valve seat 52 protrudes in a direction in which the reed valve 51 is separated from the fixed scroll 30. Therefore, the reed valve 51 does not directly collide against the fixed scroll 30, and the reed valve 51 is brought into contact with the valve seat 52 that is formed of material having a longitudinal elastic modulus lower than that of the compressing mechanism 5, whereby the impact that occurs when the reed valve 51 is located on the valve seat 52 is reduced. As a result, in the compressor 100, the impact occurring when the reed valve 51 is located on the valve seat 52 is reduced, and the possibility of the reed valve 51 and the valve seat 52 being damaged is reduced.

Furthermore, the valve seat 52 protrudes in the direction in which the reed valve 51 is separated from the fixed scroll 30, and is formed of material having a longitudinal elastic modulus lower than that of the fixed scroll 30. Therefore, in the compressor 100, the adhesion between the reed valve 51 and the valve seat 52 is improved, and the space between the reed valve 51 and the compressing mechanism 5 is reliably sealed. As a result, since the space between the reed valve 51 and the compressing mechanism 5 is reliably sealed, leakage of the refrigerant from the space between the reed valve 51 and the fixed scroll 30 is reduced, and the compression efficiency of the compressor 100 is thus improved.

Furthermore, in the compressor 100, in the surface 30a1 of the compressing mechanism 5 that adjoins the discharge chamber 13, the valve-seat accommodation portion 32b is provided in such a manner as to be recessed from the surface 30a1 toward the compression chamber 5a, and the valve seat 52 is provided in the valve-seat accommodation portion 32b. Therefore, movement of the valve seat 52 in the horizontal direction is prevented by sidewalls of the valve-seat accommodation portion 32b that define the recess of the valve-seat accommodation portion 32b. As a result, in the compressor 100, it is possible to prevent displacement of the valve seat 52, and thus reliably fixe the valve seat 52.

Furthermore, in the compressor 100, the diameter of the valve-seat hole 52a is larger than the diameter of the opening end 32a on the outlet side of the discharge port 32 provided in the fixed scroll 30. Therefore, in the compressor 100, the pressure of the refrigerant discharged from the discharge port 32 does not directly act on the valve seat 52, and separation of the valve seat 52 can thus be prevented. Moreover, in the compressor 100, the pressure of the refrigerant discharged from the discharge port 32 does not directly act on the valve seat 52, that is, it does not hinder the flow of the refrigerant discharged from the discharge port 32.

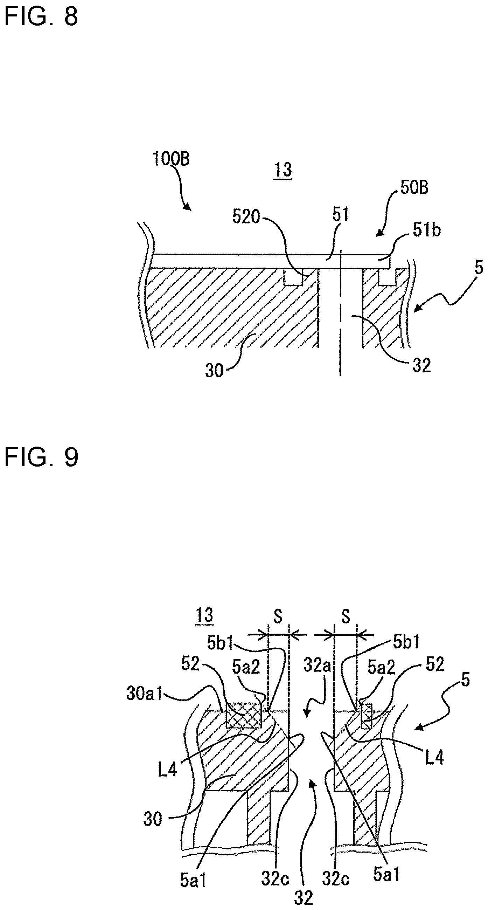

Fig. 8 is a schematic cross-sectional view illustrating a seal structure of a discharge-valve mechanism 50B of a compressor 100B of a comparative example. In the comparative example, the discharge-valve mechanism 50B includes a reed valve 51 and a valve seat 520 in a fixed scroll 30, and it is conceivable that the high-pressure space and the low-pressure space are sealed with metallic contact between the reed valve 51 and the valve seat 520. A refrigeration cycle apparatus provided with the compressor 100B may normally perform a pump-down operation. In the pump-down operation, for example, a valve located downstream of a condenser is closed to cause liquid refrigerant to be stored in the condenser. Also, an expansion valve is closed. Then, when the pressure of the suction side of the compressor 100B or the pressure of the discharge side of the compressor 100B reaches a predetermined value, the refrigeration cycle apparatus stops. After the pump-down operation is performed, the high-pressure side and the low-pressure side of the compressor 100B need to be shut off from each other. In the discharge-valve mechanism 50B, since the high-pressure space and the low-pressure space are sealed with metallic contact between the reed valve 51 and the valve seat 520, the amount of refrigerant that leaks from the high-pressure space to the low-pressure space may vary in accordance with, for example, the surface roughness, the flatness, and the presence or absence of burrs on the valve seat 520. Therefore, in the refrigeration cycle apparatus provided with the compressor 100B, a check valve may be provided downstream of the compressor 100B. However, in the refrigeration cycle apparatus provided with the compressor 100B, in the case where a check valve is provided downstream of the compressor 100B, it is disadvantage in pressure loss. Also, the manufacturing cost is increased because of provision of the check valve.

The valve seat 52 is formed of material having a longitudinal elastic modulus lower than that of the fixed scroll 30. Therefore, the adhesion between the reed valve 51 and the valve seat 52 is improved, and the space between the reed valve 51 and the compressing mechanism 5 is reliably sealed. Furthermore, in the compressor 100, the valve seat 52 protrudes in the direction in which the reed valve 51 is separated from the fixed scroll 30. Therefore, in the compressor 100, the adhesion between the reed valve 51 and the valve seat 52 is further improved, and the space between the reed valve 51 and the compressing mechanism 5 is more reliably sealed. Therefore, when the refrigerant is stored in a region located downstream of the compressor 100, for example, as in the case where the refrigeration cycle apparatus provided with the compressor 100 performs the pump-down operation, the compressor 100 can prevent backflow of the refrigerant because the space between the reed valve 51 and the valve seat 52 is sealed. Thus, the refrigeration cycle apparatus provided with the compressor 100 does not need an additional component, such as a check valve, which prevents the backflow, or can be formed with a simple structure even if incorporating an additional component such as a check valve. Furthermore, since the sealing is ensured with the above configuration of the compressor 100, in the case where the compression is insufficient, that is, the ratio between the discharge pressure and the suction pressure is higher than a design volume ratio, an insufficient compression loss that occurs when the compressor 100 compresses the refrigerant is reduced.

Fig. 9 is a cross-sectional view illustrating the shape of the outlet of the discharge port 32 in the compressor 100 according to Embodiment 1 of the present disclosure. As illustrated in Fig. 9, the opening end 32a on the outlet side of the discharge port 32 provided in the fixed scroll 30 is chamfered, whereby the pressure loss can be reduced. Therefore, in terms of reduction of the pressure loss, it is preferable that the opening end 32a on the outlet side of the discharge port 32 provided in the fixed scroll 30 be greatly chamfered, or the discharge port 32 provided in the fixed scroll 30 be made to have a larger diameter. However, in the compressor 100B of the comparative example as illustrated in Fig. 8, the seal mechanism achieves sealing with metallic contact between the reed valve 51 and the valve seat 520, and a large impact acts on the reed valve 51 when the reed valve 51 is located on the valve seat 520 since the valve seat 520 is rigid. Furthermore, the larger the diameter of the discharge port 32 provided in the fixed scroll 30, the greater a stress that acts on the reed valve 51 when the reed valve 51 is located on the valve seat 520. When given a greater stress, the reed valve 51 may be broken. That is, in order to reduce the pressure loss, it is preferable that the discharge port 32 be made to have a larger diameter or the opening end 32a be greatly chamfered; however, if so, in the compressor 100B of the comparative example, the reed valve 51 may be broken. Therefore, in the compressor 100B of the comparative example, the diameter of the discharge port 32 cannot be increased, or the opening end 32a on the outlet side of the discharge port 32 cannot be greatly chamfered. In contrast, in Embodiment 1 of the present disclosure, the valve seat 52 of the compressor 100 is made of material having a longitudinal elastic modulus lower than that of the fixed scroll 30. Furthermore, the valve seat 52 protrudes in the direction in which the reed valve 51 is separated from the fixed scroll 30. In the compressor 100 having such a configuration, the stress that acts on the reed valve 51 when the reed valve 51 is located on the valve seat 52 can be reduced even if the diameter of the discharge port 32 is increased, and the reliability of the reed valve 51 can thus be ensured. Therefore, in the compressor 100, the diameter of the discharge port 32 can be increased, or the opening end 32a on the outlet side of the discharge port 32 can be greatly chamfered. Thus, in the compressor 100, the pressure loss can be reduced. Preferably, how the opening end 32a of the discharge port 32 in the fixed scroll 30 of the compressor 100 is chamfered in shape should be determined as follows. First, in a certain vertical section of the fixed scroll 30, a chamfering start point 5a1 is set at an inner peripheral wall 32c in the discharge port 32. Then, an imaginary line L4 connecting the start point 5a1 and an inner peripheral edge 5a2 of the valve seat 52 that defines the valve-seat hole 52a is determined. Next, a contact point between the imaginary line L4 and the surface 30a1 of the end plate 30a forming part of the fixed scroll 30, which is a surface adjoining the discharge chamber 13, is set as an intersection 5b1. Preferably, chamfered part of the opening end 32a of the discharge port 32 should be located in a range S between the inner peripheral wall 32c of the discharge port 32 and the intersection point 5b1. When the chamfered part is located in the range S, the valve seat 52 does not hinder the flow of the refrigerant that is discharged from the discharge port 32, as a result of which the refrigerant more easily flows into the discharge pipe 12, and the pressure loss can be reduced.

Furthermore, with regard to the contact length between the reed valve 51 and the valve seat 52 on the center line X of the reed valve 51 in the compressor 100, the contact length L2 at the above region closer to the distal end 51b of the reed valve 51 is smaller than the contact length L1 at the above region closer to the fixed end 51a of the reed valve 51. As a result, with regard to the contact area between the reed valve 51 and the valve seat 52 in the compressor 100, the contact area at the region closer to the distal end 51b of the reed valve 51 is smaller than the contact area at the region closer to the fixed end 51a of the reed valve 51. With regard to the contact area between the reed valve 51 and the valve seat 52 in the compressor 100, since the contact area at the region closer to the distal end 51b of the reed valve 51 is smaller than the contact area at the region closer to the fixed end 51a of the reed valve 51, the rupture resistance of the oil film at the region closer to the distal end 51b of the reed valve 51 can be reduced. As a result, in the compressor 100, the rupture resistance of the oil film between the reed valve 51 and the valve seat 52 at a valve opening timing of the discharge-valve mechanism 50 can be reduced, and an over-compression loss at the valve opening timing can be reduced.

In the compressor 100, the vertical section of the valve seat 52 is rectangular and longer in the extending direction of the reed valve 51. Therefore, because of this configuration, the following advantages can be obtained. Firstly, the volume of the valve seat 52 can be increased, and the durability of the valve seat 52 can thus be improved. Secondly, the vertical section of the valve seat 52 is rectangular, an impact that acts on the valve seat 52 when the reed valve 51 is located on the valve seat 52 can be uniformly dispersed, and the durability of the valve seat 52 and the reed valve 51 can thus be improved.

In the compressor 100 according to Embodiment 1, a surface of the valve seat 52 that faces the reed valve 51 is flat. Thus, the area of a sealing surface between the valve seat 52 and the reed valve 51 is increased, and the space between the valve seat 52 and the reed valve 51 is more reliably sealed. As a result, in the compressor 100, leakage of the refrigerant from the space between the reed valve 51 and the fixed scroll 30 is reduced, and the compression efficiency of the compressor 100 is improved.

The compressor 100 includes the fixed scroll 30 and the orbiting scroll 40, and the reed valve 51 and the valve seat 52 are attached to the fixed scroll 30. Because the reed valve 51 and the valve seat 52 are attached to the fixed scroll 30 that is not greatly affected by vibrations as compared with the orbiting scroll 40, the possibility of the reed valve 51 and the valve seat 52 being damaged can be reduced. Furthermore, in the compressor 100, since the reed valve 51 and the valve seat 52 are attached using space in the fixed scroll 30 that adjoins the discharge chamber 13, the reed valve 51 and the valve seat 52 can be easily attached, and the compressor 100 can be made smaller.

In the compressor 100, the discharge-valve mechanism 50 further includes the fixing member 500 that fixes the valve seat 52 to the compressing mechanism 5. In the compressor 100, because the valve seat 52 is fixed to the end plate 30a of the fixed scroll 30 by the fixing member 500, the possibility of the valve seat 52 being detached from the end plate 30a is reduced.

In the compressor 100, fixing members 500 are provided on opposite sides with respect to the reed valve 51; that is, the reed valve 51 is interposed between the fixing members 500. In the compressor 100, the valve seat 52 is fixed at a plurality of locations, and the valve seat 52 is fixed at the opposite ends of the valve seat 52, with the valve-seat hole 52a interposed between the opposite ends of the valve seat 52, whereby the valve seat 52 and the fixed scroll 30 are reliably fixed to each other.

### Embodiment 2

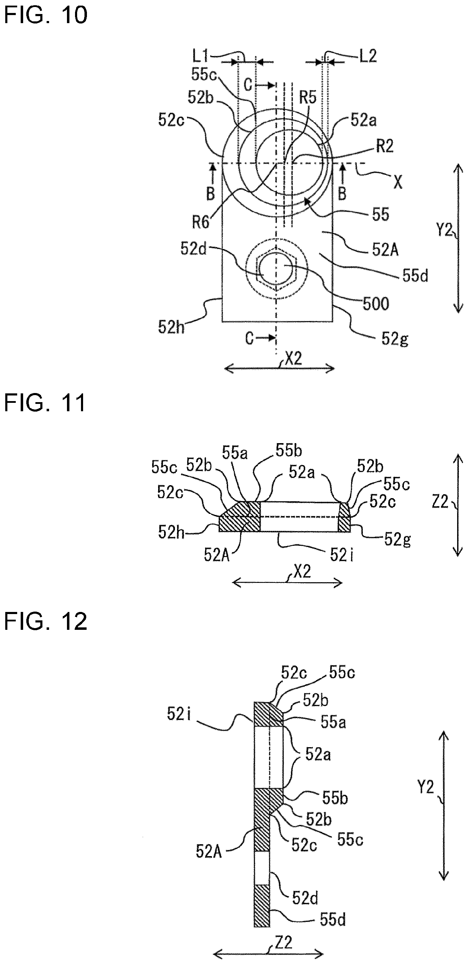

Fig. 10 is a top view illustrating a valve seat 52A of a compressor 100 according to Embodiment 2 of the present disclosure. Fig. 11 is a sectional view of the valve seat 52A as illustrated in Fig. 10 that is taken along line B-B in Fig. 10. Fig. 12 is a sectional view of the valve seat 52A as illustrated in Fig. 10 that is taken along line C-C in Fig. 10. In the compressor 100 according to Embodiment 2, components that are the same as those of the compressor 100 as illustrated in Figs. 1 to 9 will be denoted by the same reference signs, and their descriptions will thus be omitted. Embodiment 2 will be described by referring to the differences between the compressor 100 according to Embodiment 2 and the compressor 100 as illustrated in Figs. 1 to 9. It should be noted that in Figs. 10 and 11, an X2 axis indicates the width direction of the valve seat 52A, a Y2 axis indicates the longitudinal direction of the valve seat 52A, and a Z2 axis indicates the thickness direction of the valve seat 52A and the direction in which the reed valve 51 is separated from the valve seat 52A. The valve seat 52A is attached to the compressing mechanism 5. Specifically, the valve seat 52A is located in the valve-seat accommodation portion 32b, and in this state, the valve seat 52A is fixed to the end plate 30a of the fixed scroll 30 by using the fixing member 500. Also, in the above state in which the valve seat 52A is located in the valve-seat accommodation portion 32b, the valve seat 52A protrudes from the compressing mechanism 5 in the direction in which the reed valve 51 is separated from the valve seat 52A. More specifically, in the above state, the valve seat 52A protrudes from the surface 30a1 of the end plate 30a of the fixed scroll 30 in the direction in which the reed valve 51 is separated from the valve seat 52. Furthermore, the valve seat 52A is formed of material having a longitudinal elastic modulus lower than that of the fixed scroll 30 of the compressing mechanism 5. This material is, for example, resin material such as rubber. The longitudinal elastic modulus of the reed valve 51 and the longitudinal elastic modulus of the compressing mechanism 5 are nearly equal to each other, and are higher than the longitudinal elastic modulus of the valve seat 52A.

The valve seat 52A has a seat portion 55 which is formed in the shape of a truncated cone and on which the reed valve 51 is located. The seat portion 55 has a slope 55c between a lower edge 52c that corresponds to an outer peripheral edge of an imaginary lower surface 55a of a truncated cone as illustrated in Fig. 11 and an upper edge 52b which corresponds to an outer peripheral edge of an upper base surface 55b of the truncated cone. Therefore, as illustrated in Figs. 11 and 12, the vertical section of the seat portion 55 of the valve seat 52A tapers in the direction in which the reed valve 51 is separated from the valve seat 52A. Since the seat portion 55 is part of the valve seat 52A, the lower surface 55a of the truncated cone is an imaginary surface parallel to a base surface 52i of the valve seat 52A. The upper base surface 55b faces the distal end 51b of the reed valve 51 and is flat. In the upper base surface 55b, the valve-seat hole 52a is formed to extend through the valve seat 52A. The thickness of the seat portion 55 is greater than the thickness of a base plate portion 55d in which the insertion hole 52d is formed. In other words, the thickness of the base plate portion 55d having the insertion hole 52d is smaller than the thickness of the seat portion 55. Therefore, the seat portion 55 of the valve seat 52A, where the reed valve 51 is brought into contact with the valve seat 52A, more greatly protrudes than the base plate portion 55d where the fixing member 500 is attached, and the seat portion 55 tapers in the direction in which the reed valve 51 is separated from the valve seat 52A.

As illustrated in Figs. 10 to 12, the seat portion 55 is formed in the shape of a truncated cone obtained from an oblique circular cone. In the width direction (the X2-axis direction) of the valve seat 52A, the apex of an imaginary oblique circular cone based on the seat portion 55 is located closer to the end 52g that is one of opposite ends of the valve seat 52A with respect to a center line C-C that extends through the center of the valve seat 52A. Therefore, in the width direction of the valve seat 52A, a center point R5 of the upper base surface 55b is located closer to the end 52g of the valve seat 52A with respect to a center point R6 of the lower surface 55a. In the lateral direction of the valve seat 52A, the center point R2 of the valve-seat hole 52a is located closer to the end 52g of the opposite ends of the valve seat 52A with respect to the center point R5 of the upper base surface 55b. Therefore, with regard to the contact length between the reed valve 51 and the valve seat 52A on the center line X in the extending direction that extends through the center of the reed valve 51 in the width W direction thereof, the contact length L2 at one of regions located on opposite sides of the valve-seat hole 52a on the center line X that is a region closer to the distal end 51b of the reed valve 51 is smaller than the contact length L1 at the other region that is closer to the fixed end 51a of the reed valve 51. Therefore, with regard to the contact area between the reed valve 51 and the upper base surface 55b in the width direction of the valve seat 52A, the contact area on a side closer to the end 52g of the valve seat 52A is smaller than the contact area on a side closer to the end 52h of the valve seat 52A, and the contact area at the above region closer to the distal end 51b of the reed valve 51 is smaller than the contact area at the above region closer to the fixed end 51a of the reed valve 51. It should be noted that in the width direction of the valve seat 52A, the side closer to the end 52h of the valve seat 52A is a side where the fixed end 51a of the reed valve 51 is located, and the side closer to the end 52g of the valve seat 52A is a side where the distal end 51b of the reed valve 51 is located.

### [Advantages of Embodiment 2]

As described above, in the compressor 100 according to Embodiment 2, the seat portion 55 where the reed valve 51 is brought into contact with the valve seat 52A more greatly protrudes than the base plate portion 55d to which the fixing member 500 is attached, and the seat portion 55 tapers in the direction in which the reed valve 51 is separated from the valve seat 52A. Therefore, the contact area between the reed valve 51 and the valve seat 52A is reduced, and a contact pressure per unit area that occurs between the reed valve 51 and the valve seat 52A is increased. As a result, when the reed valve 51 is located on the valve seat 52A, the valve seat 52A is more easily deformed than the valve seat 52A of the compressor 100 according to Embodiment 1, whereby the space between the reed valve 51 and the compressing mechanism 5 is reliably sealed. In particular, in the case where the valve seat 52A is formed of material having elasticity, the valve seat 52A is pressed down when the reed valve 51 is located on the valve seat 52A, whereby a seal surface is formed to reliably seal the space between the reed valve 51 and the valve seat 52A. Furthermore, in the compressor 100, the seat portion 55 where the reed valve 51 is brought into contact with the valve seat 52A more greatly protrudes than the base plate portion 55d to which the fixing member 500 is attached, and tapers in the direction in which the reed valve 51 is separated from the valve seat 52A, and part of the valve seat 52A on which the reed valve 51 is located can be formed with a higher accuracy.

Furthermore, with regard to the contact length between the reed valve 51 and the valve seat 52A on the center line X of the reed valve 51 in the compressor 100 according to Embodiment 2, the contact length L2 at the above region closer to the distal end 51b of the reed valve 51 is smaller than the contact length L1 at the above region lose to the fixed end 51a of the reed valve 51. As a result, in the compressor 100, with regard to the contact area between the reed valve 51 and the valve seat 52A, the contact area on the region closer to the distal end 51b of the reed valve 51 is smaller than the contact area on the region closer to the fixed end 51a of the reed valve 51. In the compressor 100, with regard to the contact area between the reed valve 51 and the valve seat 52A, since the contact area at the region closer to the distal end 51b of the reed valve 51 is smaller than the area at the region closer to the fixed end 51a of the reed valve 51, the resistance against oil film rupture at the distal end 51b of the reed valve 51 can be reduced. As a result, in the compressor 100, the resistance against oil film rupture between the reed valve 51 and the valve seat 52A at the valve opening timing of the discharge-valve mechanism 50 can be reduced, and the over-compression loss at the valve opening timing can be reduced.

Furthermore, in the compressor 100 according to Embodiment 2, the thickness of the base plate portion 55d which has the insertion hole 52d and to which the fixing member 500 is attached is smaller than the thickness of the seat portion 55. In the compressor 100, the base plate portion 55d having the insertion hole 52d is made to have a smaller thickness, whereby the influence of warping that occurs when the fixing member 500 is attached and the influence of warping that is caused by, for example, aged deterioration can be reduced. Furthermore, in the compressor 100, the base plate portion 55d having the insertion hole 52d is made to have a smaller thickness, whereby the amount of material can be reduced, and the cost can thus be reduced. In addition, in the compressor 100, the base plate portion 55d having the insertion hole 52d is made to have a smaller thickness, whereby the influence of, for example, a sink mark that occurs when the valve seat 52A is formed by molding can be reduced.

### Embodiment 3

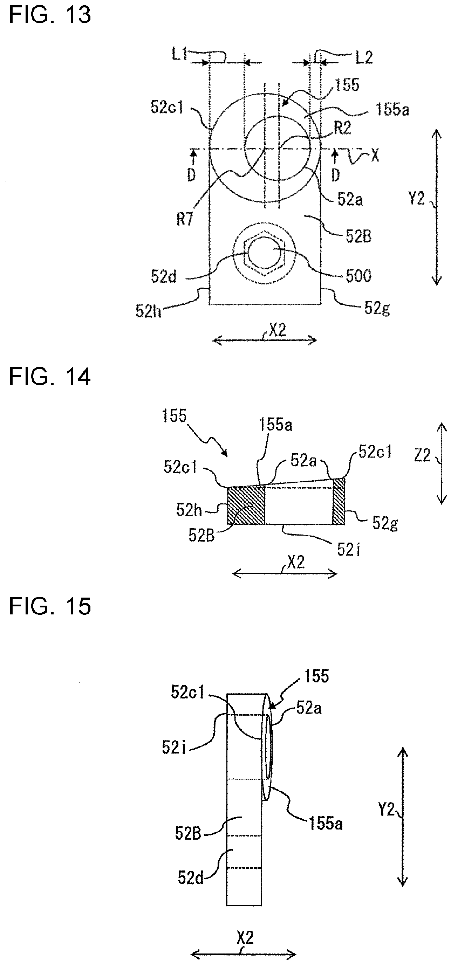

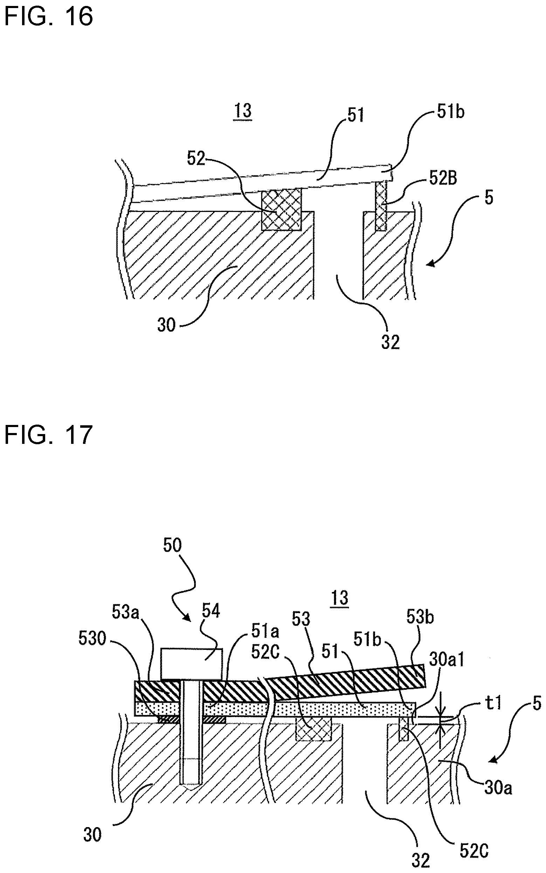

Fig. 13 is a top view illustrating a valve seat 52B of a compressor 100 according to Embodiment 3 of the present disclosure. Fig. 14 is a cross-sectional view of the valve seat 52B as illustrate in Fig. 13 that is taken along line D-D in Fig. 13. Fig. 15 is a side view of the valve seat 52B as illustrated in Fig. 13. Fig. 16 is a schematic cross-sectional view indicating a relationship between the valve seat 52B as illustrated in Fig. 15 and the reed valve 51. In the compressor 100 according to Embodiment 3, components that have the same configurations as those of the compressor 100 as illustrated in Figs. 1 to 12 will be denoted by the same reference signs, and their descriptions will thus be omitted. The differences between the compressor 100 according to Embodiment 3 and the compressor 100 as illustrated in Figs. 1 to 12 will be described. In Figs. 13 to 15, an X2 axis indicates the width direction of the valve seat 52B, a Y2 axis indicates the longitudinal direction of the valve seat 52B, and a Z2 axis indicates the thickness direction of the valve seat 52B and the direction in which the reed valve 51 is separated from the valve seat 52B.

The valve seat 52B has a cylindrical seat portion 155 on which the reed valve 51 is located. In the seat portion 155, the end 52g of the valve seat 52B has a thickness greater than that of the end 52h of the valve seat 52B. Therefore, a contact surface 155a that corresponds to an upper surface of the seat portion 155 is inclined relative to the base surface 52i of the valve seat 52B. The contact surface 155a is flat. The contact surface 155a is a surface on which the reed valve 51 is located. In the width direction of the valve seat 52B, a side closer to the end 52h of the valve seat 52B is located is a side where the fixed end 51a of the reed valve 51 is located, and a side closer to the end 52g of the valve seat 52B is located is a side where the distal end 51b of the reed valve 51 is located. Therefore, with regard to the valve seat 52B, a vertical section of the valve seat 52B of the seat portion 155 with which the reed valve 51 is brought into contact gradually increases in thickness from one of opposite regions of the valve seat 52B that is closer to the fixed end 51a of the reed valve 51 toward the other region that is closer to the distal end 51b in the extending direction of the reed valve 51, as illustrated in Figs. 14 and 16.

As illustrated in Fig. 13, in the seat portion 155, the center point R2 of the valve-seat hole 52a is located closer to the end 52g of the valve seat 52B that is one of ends of the valve seat 52B in the width direction of the valve seat 52B, with respect to a center point R7 of a circle formed by an outer edge 52c1 of the seat portion 155. Therefore, with regard to the contact length between the reed valve 51 and the valve seat 52B on the center line X extends in the extending direction of the reed valve 51 through the center of the reed valve 51 in the width W direction of the reed valve 51, the contact length L2 at one of regions located on opposite sides of the valve-seat hole 52a on the center line X that is a region closer to the distal end 51b of the reed valve 51 is smaller than the contact length L1 at the other region that is a region closer to the fixed end 51a of the reed valve 51. Therefore, in the width direction of the valve seat 52B, the contact area between the reed valve 51 and the contact surface 155a on the side where the end 52g of the valve seat 52B is located is smaller than that on the side where the end 52h of the valve seat 52B is located, and the contact area between the reed valve 51 and the contact surface at the region closer to the distal end of the reed valve 51 is smaller than that at the region closer to a proximal end of the reed valve, that is, the fixed end of the reed valve 51.

### [Advantages of Embodiment 3]

As described above, in the compressor 100 according to Embodiment 3, in the extending direction of the reed valve 51, the vertical section of the valve seat 52B of the seat portion 155 with which the reed valve 51 is brought into contact gradually increases in thickness from the region closer to the fixed end 51a of the reed valve 51 toward the region closer to the distal end 51b. Therefore, the reed valve 51 can be warped along the valve seat 52B, and at the region closer to the proximal end, that is, the fixed end of the reed valve 51 and the region closer to the distal end of the reed valve 51, equivalent contact pressures can be obtained. As a result, the sealing characteristic of the compressor 100 can be further improved than that of the compressor 100 according to Embodiment 1.

Furthermore, in the compressor 100 according to Embodiment 3, with regard to the contact length between the reed valve 51 and the valve seat 52B on the center line X of the reed valve 51, the contact length L2 at the above region closer to the distal end 51b of the reed valve 51 is smaller than the contact length L1 at the above region closer to the fixed end 51a of the reed valve 51. As a result, in the compressor 100, with regard to the contact area between the reed valve 51 and the valve seat 52B, the contact area at the region closer to the distal end 51b of the reed valve 51 is smaller than the contact area at the region closer to the fixed end 51a of the reed valve 51. In the compressor 100, with regard to the contact area between the reed valve 51 and the valve seat 52B, since the contact area at the region closer to the distal end 51b of the reed valve 51 is smaller than the contact area at the region closer to the fixed end 51a of the reed valve 51, the rupture resistance of the oil film at the region closer to the distal end 51b of the reed valve 51 can be reduced. As a result, in the compressor 100, the rupture resistance of the oil film between the reed valve 51 and the valve seat 52B at the valve opening timing of the discharge-valve mechanism 50 can be reduced, and the over-compression loss at the valve opening timing can be reduced.

### Embodiment 4

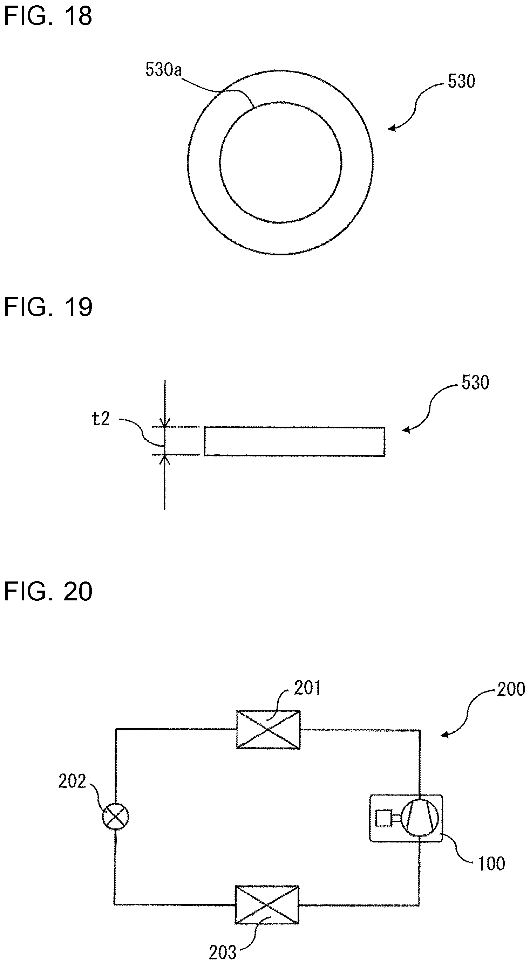

Fig. 17 is a schematic cross-sectional view illustrating a valve seat 52C of a compressor 100 according to Embodiment 4 of the present disclosure. Fig. 18 is a top view of a spacer 530 in Fig. 17. Fig. 19 is a side view of the spacer 530 as illustrated in Fig. 17. Regarding the compressor 100 according to Embodiment 4, components that are the same as those of any of the compressors 100 as illustrated in Figs. 1 to 16 will be denoted by the same reference signs, and their descriptions will thus be omitted. The compressor 100 according to Embodiment 4 will be described by referring to differences between the compressor 100 according to Embodiment 4 and the compressors 100 as illustrated in Figs. 1 to 16. The valve seat 52C as illustrated in Figs. 17 to 19 is the same as any of the valve seat 52, the valve seat 52A, and the valve seat 52B that are provided in the compressors 100 according to Embodiments 1 to 3.

In the compressor 100 according to Embodiment 4, as illustrated in Fig. 17, the discharge-valve mechanism 50 further has a spacer 530 between the reed valve 51 and the compressing mechanism 5. The fastener 54 fixes the valve retainer 53 and the reed valve 51 to the fixed scroll 30, and the spacer 530 is provided between the reed valve 51 and the fixed scroll 30. As illustrated in Figs. 18 and 19, the spacer 530 is a ring-shaped flat plate having a through-hole 530a that is formed in a central portion of the spacer 530 and that allows the fastener 54 to penetrate the spacer 530 through the through-hole 530a. The spacer 530 may be formed of metal or resin such as plastic. The spacer 530 as illustrated in Fig. 19 has a thickness t2 that is slightly smaller than or equal to a thickness t1 of part of the valve seat 52C that protrudes from the surface 30a1 of the end plate 30a forming part of the fixed scroll 30 as illustrated in Fig. 17, which is a surface adjoining the discharge chamber 13 of the end plate 30a. That is, the thickness t2 of the spacer 530 is smaller than or equal to the thickness t1 of the part of the valve seat 52C that protrudes from the compressing mechanism 5.

### [Advantages of Embodiment 4]

As described above, in the compressor 100 according to Embodiment 4, the spacer 530 is provided between the reed valve 51 and the compressing mechanism 5. The thickness t2 of the spacer 530 is smaller than or equal to the thickness t1 of the part of the valve seat 52C that protrudes from the compressing mechanism 5. Therefore, with regard to a contact pressure that occurs between the reed valve 51 and the valve seat 52C, a contact pressure at the region closer to the distal end 51b is equivalent to a contact pressure at the region closer to the fixed end 51a of the reed valve 51. As a result, in the compressor 100, the adhesion between the reed valve 51 and the valve seat 52C is improved, and the space at the compressing mechanism 5 is more reliably sealed by the reed valve 51.

### Embodiment 5

### [Refrigeration Cycle Apparatus 200]

Fig. 20 is a schematic view illustrating a refrigeration cycle apparatus 200 provided with a compressor 100 according to Embodiment 5 of the present disclosure. The refrigeration cycle apparatus 200 includes the compressor 100, a condenser 201, an expansion device 202, and an evaporator 203. As illustrated in Fig. 20, in the refrigeration cycle apparatus 200, the compressor 100, the condenser 201, the expansion device 202, and the evaporator 203 are connected in series by refrigerant pipes, whereby a refrigerant cycle circuit is provided. Refrigerant for use in the refrigeration cycle apparatus 200 may be flammable refrigerant. An example of the flammable refrigerant is propane.

The compressor 100 according to Embodiment 5 is the compressor 100 according to any one of Embodiments 1 to 4, and compresses low-pressure gas-phase refrigerant sucked into the compressor 100 into high-temperature, high-pressure gas-phase refrigerant. The condenser 201 causes the high-temperature, high-pressure gas-phase refrigerant supplied from the compressor 100 to transfer heat, to thereby change the high-temperature, high-pressure gas-phase refrigerant into high-pressure liquid-phase refrigerant. The expansion device 202 reduces the pressure of the high-pressure liquid-phase refrigerant supplied from the condenser 201 to change the high-pressure liquid-phase refrigerant into low-temperature, low-pressure liquid-phase refrigerant. The evaporator 203 causes the liquid-phase refrigerant supplied from the expansion device 202 to evaporate to change the liquid-phase refrigerant into low-pressure gas-phase refrigerant. At this time, the heat of evaporation is received by the refrigerant whose phase is being changed, whereby a region surrounding the evaporator 203 is cooled. The gas-phase refrigerant having received the heat of evaporation is re-sucked into the compressor 100. In such a manner, in the refrigeration cycle apparatus 200, the refrigerant circulates as a working fluid while changing in phase between gas-phase refrigerant and liquid-phase refrigerant. In the refrigeration cycle apparatus 200, heat is transferred from the refrigerant in the change process of the refrigerant from gas-phase refrigerant to liquid-phase refrigerant, and heat is received by the refrigerant in the change process of the refrigerant from liquid-phase refrigerant to gas-phase refrigerant. In the refrigeration cycle apparatus 200, heating operation and cooling operation are performed by utilizing the above transfer and reception of heat.

Next, the pump-down operation of the refrigeration cycle apparatus 200 will be described. In the pump-down operation, for example, a valve located downstream of the condenser 201 is closed to cause liquid refrigerant to be stored in the condenser 201. Also, the expansion device 202 is closed. Then, when the pressure on the suction side of the compressor 100 or the pressure on the discharge side of the compressor 100 reaches a predetermined value, the refrigeration cycle apparatus 200 is stopped.

### [Advantages of Embodiment 5]

As described above, the refrigeration cycle apparatus 200 includes the compressor 100 according to any one of Embodiments 1 to 4, thereby obtaining the advantages of the compressor 100 according to any one of Embodiments 1 to 4.

Furthermore, the valve seat 52 of the compressor 100 for use in the refrigeration cycle apparatus 200 is formed of material having a longitudinal elastic modulus lower than that of the fixed scroll 30. Therefore, the adhesion between the reed valve 51 and the valve seat 52 is improved, and the space between the reed valve 51 and the compressing mechanism 5 is reliably sealed. Furthermore, in the compressor 100, the valve seat 52 protrudes in the direction in which the reed valve 51 is separated from the fixed scroll 30. Therefore, in the compressor 100, the adhesion between the reed valve 51 and the valve seat 52 is further improved, and the space between the reed valve 51 and the compressing mechanism 5 is more reliably sealed. Thus, when the refrigerant is stored in a region located downstream of the compressor 100 as in the case where the refrigeration cycle apparatus 200 provided with the compressor 100 performs the pump-down operation, the compressor 100 can prevent the backflow of the refrigerant because the space between the reed valve 51 and the valve seat 52 is sealed. As a result, the refrigeration cycle apparatus 200 provided with the compressor 100 does not need an additional component that prevents the backflow, such as a check valve. Furthermore, even if an additional component such as a check valve is provided, the configuration will not be complicated.

In addition, the advantages of the refrigeration cycle apparatus 200 become prominent when flammable refrigerant such as propane is applied. More specifically, in the refrigeration cycle apparatus 200 that uses flammable refrigerant, each time the refrigeration cycle apparatus 200 is stopped, the pump-down operation needs to be performed. Furthermore, in the refrigeration cycle apparatus 200, because the possibility that the backflow of the refrigerant will occur is reduced, the possibility that the refrigerant will remain in an evaporator (use-side heat exchanger) provided indoors is reduced.

The above descriptions concerning Embodiments 1 to 5 are not limitative, and various modifications can be made. For example, as the compressor 100 according to any one of Embodiments 1 to 5, a low-pressure shell scroll compressor in which a shell is filled with low-pressure refrigerant is described above by way of example. However, as the compressor 100, a high-pressure shell scroll compressor in which a shell is filled with high-pressure refrigerant, a rotary compressor, or a screw compressor can be applied. Furthermore, the valve seat 52A of the compressor according to Embodiment 2 has the seat portion 55, and the seat portion 55 is formed in the shape of a truncated cone obtained from an oblique circular cone, as illustrated in Figs. 10 to 12. However, the shape of the seat portion 55 is not limited to the above shape. For example, the seat portion 55 may be formed in the shape of a truncated cone shape obtained from a right circular cone. Furthermore, regarding Embodiments 1 to 4, the description concerning the discharge-valve mechanism 50 is made by referring to by way of example the case where the valve mechanism is applied to a single discharge port 32 of the compressing mechanism 5. However, in the case where the compressing mechanism 5 has multiple discharge ports 32, the valve mechanism can be applied to each of the multiple discharge ports 32 of the compressing mechanism 5.

### Reference Signs List

2 shell, 2a upper shell, 2b lower shell, 2c middle shell, 3 oil pump, 3a oil reservoir, 4 motor, 4a rotor, 4b stator, 5 compressing mechanism, 5a compression chamber, 5a1 start point, 5a2 inner peripheral edge, 5b1 intersection point, 6 frame, 6a suction port, 6b thrust bearing, 6c oil feeding groove, 6d internal space, 7 shaft, 7a oil passage, 8a main bearing, 8b sub bearing, 8c orbiting bearing, 11 suction pipe, 12 discharge pipe, 13 discharge chamber, 15 Oldham ring, 15b Oldham ring space, 16 slider, 17 sleeve, 18 first balancer, 18a balancer cover, 19 second balancer, 20 sub frame, 21 oil drain pipe, 30 fixed scroll, 30a end plate, 30a1 surface, 30a2 screw hole, 31 spiral portion, 32 discharge port, 32a opening end, 32b valve-seat accommodation portion, 32c inner peripheral wall, 40 orbiting scroll, 40a end plate, 41 spiral portion, 50 discharge-valve mechanism, 50B discharge-valve mechanism, 51 reed valve, 51a fixed end, 51b distal end, 51c intermediate portion, 52 valve seat, 52A valve seat, 52B valve seat, 52C valve seat, 52a valve-seat hole, 52b upper edge, 52c lower edge, 52c1 outer edge, 52d insertion hole, 52e end, 52f end, 52g end, 52h end, 52i base surface, 53 valve retainer, 53a fixed end, 53b distal end, 54 fastener, 55 seat portion, 55a lower surface, 55b upper base surface, 55c slope, 55d base plate portion, 100 compressor, 100B compressor, 152a portion, 152b portion, 155 seat portion, 155a contact surface, 200 refrigeration cycle apparatus, 201 condenser, 202 expansion device, 203 evaporator, 500 fixing member, 520 valve seat, 530 spacer, 530a through-hole

## Claims

1. A compressor (100) comprising:
a shell (2);
a compressing mechanism (5) provided in the shell (2), and having a compression chamber (5a) where refrigerant is compressed and a discharge port (32) from which the refrigerant compressed in the compression chamber (5a) is discharged; and
a discharge-valve mechanism (50) provided in a discharge chamber (13) provided between the shell (2) and the compressing mechanism (5), the discharge-valve mechanism (50) being configured to open and close the discharge port (32),
wherein the discharge-valve mechanism (50) includes
a valve seat (52) attached to the compressing mechanism (5) and having a valve-seat hole (52a) communicating with the discharge port (32), and
a reed valve (51) having a fixed end (51a) attached to the compressing mechanism (5) and a distal end (51b) as a free end, the reed valve (51) being configured to close the valve seat (52) when the reed valve (51) is located on the valve seat (52),
wherein the valve seat (52) is formed of material having a longitudinal elastic modulus lower than a longitudinal elastic modulus of the compressing mechanism (5),
wherein the valve-seat hole (52a) has a diameter larger than a diameter of an opening end (32a) of the discharge port (32) that is located on an outlet side of the discharge port (32),
**characterized in that**
with regard to a contact length between the reed valve (51) and the valve seat (52) on a center line that extends in an extending direction of the reed valve (51) through a central portion of the reed valve (51) in a width direction of the reed valve (51), a contact length at one of regions located on opposite sides of the valve-seat hole (52a) on the center line that is a region closer to the distal end (51b) of the reed valve (51) is smaller than a contact length at the other region that is a region closer to the fixed end (51a) of the reed valve (51).

2. The compressor (100) of claim 1, wherein the valve seat (52) protrudes from the compressing mechanism (5) in a direction in which the reed valve (51) is separated from the valve seat (52).

3. The compressor (100) of claim 1 or 2, wherein at a surface (30a1) of the compressing mechanism (5) that adjoins the discharge chamber (13), a valve-seat accommodation portion (32b) is formed in such a manner as to be recessed from the surface (30a1) toward the compression chamber (5a), and the valve seat (52) is provided in the valve-seat accommodation portion (32b).

4. The compressor (100) of any one of claims 1 to 3,
wherein the valve seat (52) has a seat portion (55) on which the reed valve (51) is located, and
wherein the seat portion (55) more greatly protrudes in a direction in which the reed valve (51) is separated from the valve seat (52), than a base plate portion (55d) of the valve seat (52) where a fixing member (500) configured to fix the valve seat (52) to the compressing mechanism (5) is attached, and tapers in the direction in which the reed valve (51) is separated from the valve seat (52).

5. The compressor (100) of claim 4, wherein the base plate portion (55d) has a thickness smaller than a thickness of the seat portion (55).

6. The compressor (100) of any one of claims 1 to 3,
wherein the valve seat (52) has a seat portion (55) on which the reed valve (51) is located, and
wherein a vertical section of the seat portion (55) gradually increases in thickness from a region closer to the fixed end (51a) of the reed valve (51) toward a region closer to the distal end (51b) of the reed valve (51) in an extending direction of the reed valve (51).

7. The compressor (100) of any one of claims 1 to 3, wherein a vertical section of the valve seat (52) is rectangular and longer in an extending direction of the reed valve (51).

8. The compressor (100) of any one of claims 1 to 7, wherein a surface of the valve seat (52) that faces the reed valve (51) is flat.

9. The compressor (100) of any one of claims 1 to 8,
wherein the compressing mechanism (5) includes a fixed scroll (30) and an orbiting scroll (40), and
wherein the reed valve (51) and the valve seat (52) are provided in the fixed scroll (30).

10. The compressor (100) of any one of claims 1 to 9,
wherein the discharge-valve mechanism (50) further includes a spacer (530) between the reed valve (51) and the compressing mechanism (5), and
wherein the spacer (530) has a thickness smaller than or equal to a distance by which the valve seat (52) protrudes from the compressing mechanism (5).

11. The compressor (100) of any one of claims 1 to 10, wherein the discharge-valve mechanism (50) further includes a fixing member (500) configured to fix the valve seat (52) to the compressing mechanism (5).

12. The compressor (100) of claim 11, wherein a plurality of the fixing members (500) are provided on opposite sides, with the reed valve (51) interposed between the fixing members (500).

13. A refrigeration cycle apparatus (200) comprising:
the compressor (100) of any one of claims 1 to 12.

14. The refrigeration cycle apparatus (200) of claim 13, wherein after a pump-down operation is performed, the reed valve (51) is located on the valve seat (52) and the refrigerant is stored in a region located downstream of the compressing mechanism (5).

## Patentansprüche

1. Verdichter (100), umfassend:
einen Mantel (2);
einen Verdichtungsmechanismus (5), der in dem Mantel (2) vorgesehen ist, und eine Verdichtungskammer (5a), in der Kältemittel verdichtet wird, und eine Abgabeöffnung (32) aufweist, aus der das in der Verdichtungskammer (5a) verdichtete Kältemittel abgegeben wird; und
einen Abgabeventilmechanismus (50), der in einer Abgabekammer (13) vorgesehen ist, die zwischen dem Mantel (2) und dem Verdichtungsmechanismus (5) vorgesehen ist, wobei der Abgabeventilmechanismus (50) eingerichtet ist, die Abgabeöffnung (32) zu öffnen und zu schließen,
wobei der Abgabeventilmechanismus (50) aufweist:
einen Ventilsitz (52), der an dem Verdichtungsmechanismus (5) befestigt ist und ein Ventilsitzloch (52a) aufweist, das mit der Abgabeöffnung (32) kommuniziert, und
ein Reed-Ventil (51), aufweisend ein festes Ende (51a), das an dem Verdichtungsmechanismus (5) befestigt ist, und ein distales Ende (51b) als ein freies Ende, wobei das Reed-Ventil (51) eingerichtet ist, den Ventilsitz (52) zu schließen, wenn das Reed-Ventil (51) auf dem Ventilsitz (52) angeordnet ist,
wobei der Ventilsitz (52) aus einem Material gebildet ist, das einen geringeres Längs-Elastizitätsmodul aufweist als ein Längs-Elastizitätsmodul des Verdichtungsmechanismus (5),
wobei das Ventilsitzloch (52a) einen Durchmesser hat, der größer ist als ein Durchmesser eines Öffnungsendes (32a) der Abgabeöffnung (32), das sich auf einer Abgabeseite der Abgabeöffnung (32) befindet,
**dadurch gekennzeichnet, dass**
in Bezug auf eine Kontaktlänge zwischen dem Reed-Ventil (51) und dem Ventilsitz (52) auf einer Mittellinie, die sich in einer Erstreckungsrichtung des Reed-Ventils (51) durch einen zentralen Abschnitt des Reed-Ventils (51) in einer Breitenrichtung des Reed-Ventils (51) erstreckt, eine Kontaktlänge an einem der Bereiche, die sich auf gegenüberliegenden Seiten des Ventilsitzlochs (52a) auf der Mittellinie befinden, der ein Bereich näher am distalen Ende (51b) des Reed-Ventils (51) ist, kleiner ist als eine Kontaktlänge an dem anderen Bereich, der ein Bereich näher am festen Ende (51a) des Reed-Ventils (51) ist.

2. Verdichter (100) nach Anspruch 1, wobei der Ventilsitz (52) aus dem Verdichtungsmechanismus (5) in einer Richtung herausragt, in der das Reed-Ventil (51) vom Ventilsitz (52) getrennt ist.

3. Verdichter (100) nach Anspruch 1 oder 2, wobei an einer Oberfläche (30a1) des Verdichtungsmechanismus (5), die an die Abgabekammer (13) angrenzt, ein Ventilsitz-Aufnahmeabschnitt (32b) derart ausgebildet ist, um von der Oberfläche (30a1) in Richtung der Verdichtungskammer (5a) zurückgesetzt zu sein, und der Ventilsitz (52) in dem Ventilsitz-Aufnahmeabschnitt (32b) vorgesehen ist.

4. Verdichter (100) nach einem der Ansprüche 1 bis 3,
wobei der Ventilsitz (52) einen Sitzabschnitt (55) aufweist, auf dem das Reed-Ventil (51) angeordnet ist, und
wobei der Sitzabschnitt (55) in einer Richtung, in der das Reed-Ventil (51) von dem Ventilsitz (52) getrennt ist, stärker vorsteht als ein Grundplattenabschnitt (55d) des Ventilsitzes (52), an dem ein Fixierelement (500), das zum Fixieren des Ventilsitzes (52) an dem Verdichtungsmechanismus (5) eingerichtet ist, angebracht ist, und sich in der Richtung, in der das Reed-Ventil (51) von dem Ventilsitz (52) getrennt ist, verjüngt.

5. Verdichter (100) nach Anspruch 4, wobei der Grundplattenabschnitt (55d) eine geringere Dicke als die Dicke des Sitzabschnitts (55) aufweist.

6. Verdichter (100) nach einem der Ansprüche 1 bis 3,
wobei der Ventilsitz (52) einen Sitzabschnitt (55) aufweist, auf dem das Reed-Ventil (51) angeordnet ist, und
wobei ein vertikaler Abschnitt des Sitzabschnitts (55) allmählich in der Dicke von einem Bereich näher am festen Ende (51a) des Reed-Ventils (51) zu einem Bereich näher am distalen Ende (51b) des Reed-Ventils (51) in einer Erstreckungsrichtung des Reed-Ventils (51) zunimmt.

7. Verdichter (100) nach einem der Ansprüche 1 bis 3, wobei ein vertikaler Abschnitt des Ventilsitzes (52) rechteckig und in einer Erstreckungsrichtung des Reed-Ventils (51) länger ist.

8. Verdichter (100) nach einem der Ansprüche 1 bis 7, wobei eine Oberfläche des Ventilsitzes (52), die dem Reed-Ventil (51) zugewandt ist, flach ist.

9. Verdichter (100) nach einem der Ansprüche 1 bis 8,
wobei der Verdichtungsmechanismus (5) eine feste Spirale (30) und eine umlaufende Spirale (40) aufweist, und
wobei das Reed-Ventil (51) und der Ventilsitz (52) in der festen Spirale (30) vorgesehen sind.

10. Verdichter (100) nach einem der Ansprüche 1 bis 9,
wobei der Abgabeventilmechanismus (50) ferner einen Abstandshalter (530) zwischen dem Reed-Ventil (51) und dem Verdichtungsmechanismus (5) aufweist, und
wobei der Abstandshalter (530) eine Dicke aufweist, die kleiner oder gleich einem Abstand ist, um den der Ventilsitz (52) aus dem Verdichtungsmechanismus (5) herausragt.

11. Verdichter (100) nach einem der Ansprüche 1 bis 10, wobei der Abgabeventilmechanismus (50) ferner ein Fixierelement (500) aufweist, das eingerichtet ist, den Ventilsitz (52) an dem Verdichtungsmechanismus (5) zu fixieren.

12. Verdichter (100) nach Anspruch 11, wobei eine Vielzahl der Fixierelemente (500) auf gegenüberliegenden Seiten vorgesehen sind und das Reed-Ventil (51) zwischen den Fixierelementen (500) angeordnet ist.

13. Kältekreislaufvorrichtung (200), umfassend:
den Verdichter (100) nach einem der Ansprüche 1 bis 12.

14. Kältekreislaufvorrichtung (200) nach Anspruch 13, wobei nach Durchführung eines Abpumpbetriebs das Reed-Ventil (51) auf dem Ventilsitz (52) angeordnet ist und das Kältemittel in einem stromabwärts des Verdichtungsmechanismus (5) angeordneten Bereich gespeichert wird.

## Revendications

1. Compresseur (100), comprenant :
une coque (2) ;
un mécanisme de compression (5) prévu dans la coque (2) et comportant une chambre de compression (5a) dans laquelle le réfrigérant est comprimé et un orifice de décharge (32) à partir duquel le réfrigérant comprimé dans la chambre de compression (5a) est déchargé ; et
un mécanisme de soupape de décharge (50) placé dans une chambre de décharge (13) située entre la coque (2) et le mécanisme de compression (5), le mécanisme de soupape de décharge (50) étant configuré pour ouvrir et fermer l'orifice de décharge (32),
dans lequel le mécanisme de soupape de décharge (50) inclut
un siège de soupape (52) fixé au mécanisme de compression (5) et présentant un trou de siège de soupape (52a) communiquant avec l'orifice de décharge (32), et
une valve à membrane (51) dotée d'une extrémité fixe (51a) fixée au mécanisme de compression (5) et d'une extrémité distale (51b) comme extrémité libre, la valve à membrane (51) étant configurée pour fermer le siège de soupape (52) lorsque la valve à membrane (51) est située sur le siège de soupape (52),
dans lequel le siège de soupape (52) est formé d'un matériau présentant un module élastique longitudinal inférieur au module élastique longitudinal du mécanisme de compression (5),
dans lequel le trou du siège de soupape (52a) présente un diamètre supérieur au diamètre d'une extrémité d'ouverture (32a) de l'orifice de décharge (32) qui est situé sur un côté de sortie de l'orifice de décharge (32),
**caractérisé en ce que**
eu égard à la longueur de contact entre la valve à membrane (51) et le siège de soupape (52) sur une ligne centrale qui s'étend dans une direction d'extension de la valve à membrane (51) à travers une partie centrale de la valve à membrane (51) dans une direction de largeur de la valve à membrane (51), une longueur de contact dans l'une des régions situées sur les côtés opposés du trou du siège de soupape (52a) sur la ligne centrale qui est une région plus proche de l'extrémité distale (51b) de la valve à membrane (51) est plus petite qu'une longueur de contact dans l'autre région qui est une région plus proche de l'extrémité fixe (51a) de la valve à membrane (51).

2. Compresseur (100) selon la revendication 1, dans lequel le siège de soupape (52) fait saillie du mécanisme de compression (5) dans une direction dans laquelle la valve à membrane (51) est séparée du siège de soupape (52).

3. Compresseur (100) selon la revendication 1 ou 2, dans lequel à une surface (30a1) du mécanisme de compression (5) qui jouxte la chambre de décharge (13), une partie de logement du siège de soupape (32b) est formée de manière à être en retrait de la surface (30a1) vers la chambre de compression (5a), et le siège de soupape (52) est ménagé dans la partie de logement du siège de soupape (32b).

4. Compresseur (100) selon l'une quelconque des revendications 1 à 3,
dans lequel le siège de soupape (52) comporte une partie de siège (55) sur laquelle se trouve la valve à membrane (51), et
dans lequel la partie du siège (55) dépasse davantage dans la direction où la valve à membrane (51) est séparée du siège de soupape (52), qu'au niveau d'une partie de la plaque de base (55d) du siège de soupape (52) où est fixé un élément de fixation (500) configuré pour fixer le siège de soupape (52) au mécanisme de compression (5), et se rétrécit dans la direction où la valve à membrane (51) est séparée du siège de soupape (52).

5. Compresseur (100) selon la revendication 4, dans lequel la partie de la plaque de base (55d) présente une épaisseur inférieure à l'épaisseur de la partie du siège (55).

6. Compresseur (100) selon l'une quelconque des revendications 1 à 3,
dans lequel le siège de soupape (52) comporte une partie de siège (55) sur laquelle se trouve la valve à membrane (51), et
dans lequel une section verticale de la partie de siège (55) augmente progressivement en épaisseur d'une région plus proche de l'extrémité fixe (51a) de la valve à membrane (51) vers une région plus proche de l'extrémité distale (51b) de la valve à membrane (51) dans une direction d'extension de la valve à membrane (51).

7. Compresseur (100) selon l'une quelconque des revendications 1 à 3, dans lequel une section verticale du siège de soupape (52) est rectangulaire et plus longue dans une direction d'extension de la valve à membrane (51).

8. Compresseur (100) selon l'une quelconque des revendications 1 à 7, dans lequel une surface du siège de soupape (52) qui fait face à la valve à membrane (51) est plate.

9. Compresseur (100) selon l'une quelconque des revendications 1 à 8,
dans lequel le mécanisme de compression (5) inclut une volute fixe (30) et une volute orbitale (40), et
dans lequel la valve à membrane (51) et le siège de soupape (52) sont ménagés dans la volute fixe (30).

10. Compresseur (100) selon l'une quelconque des revendications 1 à 9,
dans lequel le mécanisme de soupape de décharge (50) inclut en outre une entretoise (530) entre la valve à membrane (51) et le mécanisme de compression (5), et
dans lequel l'entretoise (530) présente une épaisseur inférieure ou égale à la distance de saillie du siège de soupape (52) par rapport au mécanisme de compression (5).

11. Compresseur (100) selon l'une quelconque des revendications 1 à 10, dans lequel le mécanisme de soupape de décharge (50) inclut en outre un élément de fixation (500) configuré pour fixer le siège de soupape (52) au mécanisme de compression (5).

12. Compresseur (100) selon la revendication 11, dans lequel plusieurs éléments de fixation (500) sont disposés sur des côtés opposés, la valve à membrane (51) étant interposée entre les éléments de fixation (500).

13. Appareil à cycle de réfrigération (200) comprenant :
le compresseur (100) selon l'une quelconque des revendications 1 à 12,

14. Appareil à cycle de réfrigération (200) selon la revendication 13, dans lequel, après une opération de pompage, la valve à membrane (51) est située sur le siège de soupape (52) et le réfrigérant est stocké dans une région située en aval du mécanisme de compression (5).
